# EUROPÄISCHE PATENTSCHRIFT

(11) **EP 3 062 735 B1**
(45) Veröffentlichungstag und Bekanntmachung des Hinweises auf die Patenterteilung: **09.06.2021**
(21) Anmeldenummer: 14721184.1
(22) Anmeldetag: 17.04.2014
(51) Int. Cl.: A61C 17/22, A61C 17/20

(54) **ELEKTRISCH BETRIEBENES HANDGERÄT ZUR KÖRPERPFLEGE**
ELECTRICALLY OPERATED HANDHELD DEVICE FOR BODY CARE
APPAREIL À MAIN ÉLECTRIQUE POUR LE SOIN DU CORPS

(30) Priorität: 30.10.2013 EP 13405124
(43) Veröffentlichungstag der Anmeldung: 07.09.2016
(60) Teilanmeldung: 21163659.2
(73) Patentinhaber: Trisa Holding AG, 6234 Triengen (CH)
(72) Erfinder: PFENNIGER, Philipp, CH-6234 (CH); MEIER, Hanspeter, CH-4900 Langenthal (CH)
(74) Vertreter: Frei Patent Attorneys
(86) Internationale Anmeldenummer: PCT/CH2014/000051
(87) Internationale Veröffentlichungsnummer: WO 2015/061916

(56) Entgegenhaltungen:
- WO-A1-2013/105279
- WO-A2-2006/105476
- US-A1- 2004 130 915
- US-A1- 2008 064 006
- US-A1- 2011 098 613

## Beschreibung

Die Erfindung bezieht sich auf das Gebiet der Körperpflege. Sie betrifft eine elektrische Gesichtsbürste, welche als Handgerät ausgelegt ist, zur Gesichtspflege mit einer Pflegebürste zur Ausübung mindestens einer elektrisch betriebenen Gesichtspflegefunktion und mit einem Griffkörper zum Halten der Gesichtsbürste. Im Weiteren enthält die Gesichtsbürste einen Elektronikteil zur Steuerung der mindestens einen, elektrisch betriebenen Gesichtspflegefunktion.

Es sind eine Vielzahl von elektrischen Handgeräten zur Körperpflege bekannt, welche die Ausführung von elektrisch betriebenen Körperpflegefunktionen erlauben. So geniessen beispielsweise elektrische Zahnbürsten, bei welchen der Bürstenkopf zur Ausübung einer Reinigungsaufgabe über einen elektromotorischen Antrieb in Bewegung versetzt wird, eine grosse Verbreitung.

Bei elektrischen Zahnbürsten unterscheidet man zwischen oszillierenden/rotierenden Zahnbürsten, oszillierend/schwenkenden Zahnbürsten und Schallzahnbürsten. Eine oszillierende/rotierende Zahnbürste zeichnet sich durch einen runden rotierenden bzw. oszillierenden Bürstenkopf aus, der um eine Achse senkrecht zur Längsachse des Handgerätes oszilliert.

Bei der oszillierend/schwenkenden Zahnbürste führt der Bürstenkopf eine Hin- und Herbewegung um die Längsachse des Handgerätes aus.

Die Zähne werden durch die, sich mit relativ hoher Frequenz bewegenden Borsten mechanisch gereinigt.

Bei den Schallzahnbürsten wird der Bürstenkopf in Schwingung versetzt. Die Schwingfrequenz des Bürstekopfes ist jedoch höher als bei einer schwenkenden Zahnbürste. Im Unterschied zur oszillierend/schwenkenden Zahnbürste werden die Zähne jedoch nicht nur mechanisch sondern auch indirekt, über eine durch die Zahnbürste in Schwingung versetzte Flüssigkeit im Mund gereinigt.

Des Weiteren gibt es die Möglichkeit den Bürstenkopf mittels Vibrationen in Schwingung zu versetzen. In diesem Fall verfügt der Motor z. B. über einen Exzenter der die Vibrationen verursacht.

Unabhängig vom Funktionsprinzip können elektrische Zahnbürsten unterschiedlich komplex, d. h. mit mehr oder weniger Zusatzfunktionen konstruiert sein. So umfassen die elektrischen Komponenten von kostengünstigen Modellen häufig lediglich eine Energiezelle in Form einer Batterie, einen elektromotorisch betriebenen Antrieb sowie einen Ein-/Ausschalter.

Elektrische Zahnbürsten in höheren Preisklassen enthalten häufig noch einen Mikrocontroller mit Datenspeicher zur Ausübung weiterer Steuerungsfunktionen, welche über das blosse Ein- und Ausschalten der Zahnbürste hinausgehen. Dies können zum Beispiel die Steuerung von Reinigungsintervallen, verschiedenen Reinigungsleistungen oder die Erfassung und Anzeige des Ladestatus einer Energiezelle sein.

Grundsätzlich fehlt jedoch herkömmlichen elektrischen Zahnbürsten und ganz allgemein den elektrischen Handgeräten zur Körperpflege die Möglichkeit, Betriebsdaten umfangreich und systematisch zu sammeln und zur Überwachung und Optimierung der Körperpflege, insbesondere der Zahnpflege, auszuwerten.

Ferner weisen herkömmliche Handgeräte, insbesondere elektrische Zahnbürsten, Standardeinstellungen (z.B. Pflegeprogramme und Parameter) auf, die sich nicht oder nur in sehr beschränktem Rahmen Benutzer spezifisch anpassen lassen. Das heisst, den herkömmlichen Handgeräten fehlt die Möglichkeit benutzerdefinierter Einstellungen von z. B. Betriebsparametern, Steuerungsfunktionen und Pflegeprogrammen.

Den herkömmlichen Handgeräten fehlen im Weiteren die Möglichkeit der Erfassung und Auswertung von Betriebsdaten sowie die Möglichkeit zur Einspeisung von Benutzer spezifischen Daten zwecks Optimierung der Körperpflegefunktion auf Basis von ausgewerteten Betriebsdaten.

Dies liegt einerseits daran, dass die oben genannten Funktionen den Einsatz einer erweiterten Elektronik erforderlich machen. Die zusätzliche Elektronik ist jedoch vergleichsweise kostenaufwändig und verteuert das Gerät spürbar. Die Verteuerung der Handgeräte akzentuiert sich noch zusätzlich, wenn die nachfolgend genannten Massnahmen zum Schutz der Elektronik an den Handgeräten umgesetzt werden müssen.

Ferner sind dem Einsatz komplexer Elektronik in Handgeräten zur Körperpflege auch aufgrund ihrer begrenzten Grösse und somit dem begrenzten Platzangebot Grenzen gesetzt. Dies betrifft zum Beispiel auch den Einbau von Displays im Handgerät. In der Regel lassen sich bei solchen Handgeräten lediglich kleine Displays einbauen, mittels welchen sich allenfalls Zahlen oder Buchstaben jedoch graphische Darstellungen oder grössere Informationsblöcke nur höchst beschränkt oder gar nicht darstellen lassen.

Auch das Umfeld, in welchem die Handgeräte zur Körperpflege eingesetzt werden, nämlich in Nassbereichen, setzt dem Einsatz komplexer Elektronik Grenzen oder macht besondere Massnahmen, z. B. Dichtungsmassnahmen, am Handgerät erforderlich. Ein weiterer Grund, welcher den Einsatz komplexer Elektronik in Handgeräten zur Körperpflege problematisch erscheinen lässt, liegt in der Handhabung der Handgeräte. Diese sind durch den Gebrauch als Handgeräte Stössen und Schlägen ausgesetzt. Auch hier wären besondere Massnahmen zum Schutz der Elektronik gegen Stösse und Schläge, z. B. beim Fallenlassen notwendig.

Die Publikationsschrift DE 10 2007 020 100 A1 beschreibt beispielsweise eine elektrische Zahnbürste mit einem Sender, mittels welchem Daten an ein Zusatzgerät mit einer Anzeigeeinrichtung übermittelt werden können. Die Anzeigeeinrichtung erlaubt die Anzeige der Daten. Die Funktionalität der Zahnbürste ist also auf die unidirektionale Übertragung von Daten von der Zahnbürste auf das Zusatzgerät beschränkt

US 2008/064006 A1 beschreibt ein elektrisches dentales Werkzeug, das Datenübertragungsmittel umfasst.

Es ist nun eine Aufgabe der Erfindung, eine elektrische Gesichtsbürste, welche als Handgerät ausgelegt ist, zur Gesichtspflege und eine Funktionseinheit mit einer solchen elektrischen Gesichtsbürste vorzuschlagen, welche eine erweiterte Funktionalität aufweist und beispielsweise das Erfassen, Auswerten und Darstellen von Betriebs- und Sensordaten ermöglicht. Ferner soll die Gesichtsbürste bzw. die Funktionseinheit auch die Erfassung von Benutzer spezifischen Daten und die Umsetzung derselbigen in Benutzer spezifischen Pflegeprogrammen oder Steuerungsfunktionen zur Steuerung der elektrischen Gesichtsbürste ermöglichen. Die Aufgabe wird durch die Merkmale der unabhängigen Ansprüche 1, 11 und 14 gelöst. Besondere Weiterbildungen und Ausführungsformen der Erfindung ergeben sich aus den abhängigen Ansprüchen, der Beschreibung und den Zeichnungen.

Die Erfindung zeichnet sich also dadurch aus, dass der Elektronikteil ein Datenübertragungsmodul vorzugsweise zur drahtlosen, bidirektionalen Datenübertragung enthält. "Drahtlos" bedeutet in diesem Zusammenhang, dass zwischen dem Sender und dem Empfänger keine Verbindung in Form einer physischen Datenleitung (z. B. Draht, Glasfaser) zur Übertragung der Daten vom Sender zum Empfänger notwendig ist. Die Datenübertragung findet vielmehr über elektromagnetische Wellen, insbesondere Radiowellen, statt. Drahtlos schliesst daher nicht aus, dass sich zwei Geräte zwecks Datenübertragung physisch berühren können oder müssen.

Andere Mittel zur Datenübertragung sind ebenfalls möglich, z.B. eine Drahtverbindung, z. B. über einen USB- oder Mikrofonanschluss des Mobilgerätes. Einer drahtlosen Verbindung wird jedoch der Vorzug gegeben.

Das Handgerät kann insbesondere auch ein elektrisches Funktionsorgan zur Ausübung der elektrisch betriebenen Körperpflegefunktion enthalten. Das elektrische Funktionsorgan ist weiter unten näher erläutert.

Das Datenübertragungsmodul beinhaltet eine Elektronikeinheit zur drahtlosen, bidirektionalen Datenübertragung. Das Datenübertragungsmodul folgende Elemente enthalten:
- eine Datenübertragungseinrichtung mit:
   - einer Antenne,
   - Empfangsmittel zum Empfangen und zur Demodulation von Datensignalen,
   - Sendemittel zur Modulation und zum Senden von Datensignalen,
- einen Mikrocontroller;
- einen, insbesondere nicht-flüchtigen, Speicher zur Speicherung von Daten;
- gegebenenfalls eine mechanische Einheit zur mechanischen Übertragung von Daten.

Der Speicher kann physisch in den Mikrocontroller integriert sein. Überdies können Teile der Datenübertragungseinrichtung physisch in den Mikrocontroller integriert sein.

Die Datenübertragungseinrichtung umfasst insbesondere einen HF-(Hochfrequenz)-Teil. Die Antenne ist zum Beispiel eine Komponente dieses HF-Teils. Im HF-Teil werden insbesondere die zu übertragenden Datensignale moduliert bzw. die eingehenden Datensignale demoduliert.

Der Mikrocontroller des Datenübertragungsmoduls ist insbesondere ein Kommunikationsprozessor. Dieser hat die Aufgabe, den drahtlosen Datenverkehr mit einem externen Mobilgerät abzuwickeln. Die Aufgabe des Kommunikationsprozessors kann insbesondere die Aufbereitung von Daten zum Senden und die Aufbereitung von empfangenen Daten für die Weiterverarbeitung beinhalten.

Der Mikrocontroller des Datenübertragungsmoduls kann im nachfolgend noch näher beschriebenen Geräteprozessor des Handgeräts integriert sein, welcher die Funktionen des Handgeräts steuert.

Das Datenübertragungsmodul kann insbesondere dafür ausgelegt sein, mindestens einen Teil der für seinen Betrieb notwendigen elektrischen Energie kontaktlos zu beziehen.

Das Datenübertragungsmodul kann insbesondere dafür ausgelegt sein, sämtliche für seinen Betrieb notwendige elektrische Energie kontaktlos zu beziehen.

"Kontaktlos" bedeutet in diesem Zusammenhang, dass kein elektrischer Kontakt zur Übertragung von elektrischer Energie von einer Energiequelle zu einem Verbraucher hergestellt wird, damit der Verbraucher betrieben werden kann. Kontaktlos schliesst daher nicht aus, dass sich zwei Geräte zwecks Energieübertragung physisch berühren können oder müssen.

In diesem Fall handelt es sich um ein passives Datenübertragungsmodul. Der Betrieb umfasst zum Beispiel die Datenübertragung. Der Betrieb kann auch die Abarbeitung interner Prozesse auf dem Mikrocontroller umfassen.

Die Versorgung des Mikrocontrollers des Datenübertragungsmoduls mit elektrischer Energie kann beispielsweise über eine interne Energiezelle, insbesondere Batterie, oder eine leitungsgebundene Stromversorgung erfolgen. Der Mikrocontroller kann insbesondere über eine Leitungsverbindung durch den nachfolgend beschriebenen Geräteprozessor mit elektrischer Energie versorgt werden.

Der Mikrocontroller des Datenübertragungsmoduls kann jedoch seine Energie zur Datenverarbeitung auch kontaktlos beziehen, z. B. aus den durch das Mobilgerät erzeugten elektromagnetischen Wellen bzw. aus dem entsprechenden elektromagnetischen Feld.

Insbesondere die Sendemittel können die Energie zur Modulation und zum Senden von Datensignalen kontaktlos beziehen, z. B. aus den durch das Mobilgerät erzeugten elektromagnetischen Wellen bzw. aus dem entsprechenden elektromagnetischen Feld.

Insbesondere die Empfangsmittel können die Energie zum Empfang und zur Demodulation von Datensignalen kontaktlos beziehen, z. B. aus den durch das Mobilgerät erzeugten elektromagnetischen Wellen bzw. aus dem entsprechenden elektromagnetischen Feld.

Es kann insbesondere sämtliche elektrische Energie zur Ausübung der Datenübertragung kontaktlos bezogen werden.

Das Datenübertragungsmodul kann insbesondere dafür ausgelegt sein, elektrische Energie kontaktlos über elektromagnetische Wellen, wie Radiowellen, in deren Einflussbereich die dazugehörige Antenne liegt, zu beziehen. Solche Verfahren werden auch mit "Energy Harvesting" oder "Ambient Backscatter" bezeichnet. Die besagten elektromagnetischen Wellen werden insbesondere vom Mobilgerät erzeugt.

Ferner ist es auch möglich, dass das Handgerät eine photovoltaische Zelle zur Umwandlung von Licht in elektrische Energie enthält, welche beispielsweise für den Betrieb des Mikrocontrollers des Datenübertragungsmoduls und/oder für die Datenübertragung verwendet wird.

Ferner ist es auch möglich, dass das Handgerät eine thermoelektrische Einheit, welche nach dem Seebeck-Effekt funktioniert und Wärme in Elektrizität umwandelt, enthält. Eine solche Einheit kann beispielsweise für den Betrieb des Mikrocontrollers des Datenübertragungsmoduls und/oder für die Datenübertragung verwendet werden.

Das Datenübertragungsmodul kann insbesondere für eine Datenübertragung nach dem Prinzip der Nahfeldkommunikation (Near Field Communication, NFC) ausgelegt sein. Eine besondere Anwendung von NFC ist als internationaler Übertragungsstandard zum kontaktlosen Austausch von Daten per Funktechnik über kurze Strecken definiert. Die Reichweite (Übertragungsdistanz) kann auf 20 cm, insbesondere auf 10 cm begrenzt sein. Die Übertragungsdistanz ist häufig sogar auf ein paar wenige Zentimeter begrenzt, z. B. maximal 5 cm. Je geringer die Reichweite ist, desto näher müssen die Geräte zwecks Kommunikation aneinander gehalten werden. Dafür ist die Gefahr einer Beeinträchtigung der Kommunikation durch Störfelder auch kleiner.

Die Datenübertragungsrate ist in der Regel vergleichsweise klein. Sie kann z. B. bis maximal 424 kBit/s reichen. Die Datenübertragung erfolgt bei NFC gemäss Standard bei einer Frequenz von 13,56 MHz.

Dabei sollten die Antenne und der Mikrocontrollers des Datenübertragungsmoduls bei 13,56 MHz in Resonanz sein, was aufgrund des Designs des Datenübertragungsmoduls (NFC-Moduls) zu einer Induktivität der Antenne/Spule von 4.7 MikroHenry führt.

Eine besondere Anwendung der NFC-Technik wird durch die Normen ISO 15693 und -18000-3 beschrieben.

NFC erlaubt den Austausch von Daten zwischen zwei kurzzeitig ohne besondere Anmeldung gepaarten Geräten. Da die Geräte hierzu nahe aneinandergehalten werden müssen, treten auch keine Fehler bei der wechselweisen Zuordnung der Paare auf. Bei NFC erfolgt also die Zuordnung der gepaarten Geräte durch den Benutzer selbst.

Die NFC-Technik zeichnet sich gegenüber anderen Funktechniken für den Datenaustausch zwischen zwei Geräten im Nahbereich durch seine schnelle Energieübertragung, geringe Antennengrösse und vor allem durch die weniger störenden Felder aus.

Die Datenübertragung kann jedoch auch über andere, beispielsweise standardisierte Funktechniken wie Bluetooth, insbesondere Bluetooth Low Energy (BLE), Wireless Personal Area Network (WPAN), z. B. ZigBee, WLAN oder Wifi via WLan erfolgen. Ferner kann die Datenübertragung auch über Infrarot (IR) erfolgen.

Bei einer Datenübertragung auf Basis von WLAN kann das Handgerät ein Laufwerk zur Aufnahme von Speicherkarten mit Wifi-Funktion, z. B. Eye-Fi-Karten, enthalten. Eye-Fi-Karten sind Flash-Speicherkarten, wie SD- (Secure Digital Memory) oder bzw. SDHC-(SD High Capacity)-Karten, mit Wifi-Funktion, welche die drahtlose Übermittlung von Daten zum Mobilgerät erlauben.

Bei der Verwendung von Speicherkarten mit Wifi-Funktion kann die Benutzerunterscheidung über verschiedene solcher Speicherkarten erfolgen.

Zur Kommunikation zwischen Handgerät und Mobilgerät können die entsprechend dazugehörigen Kommunikationsprotokolle zum Einsatz kommen. Dies können die zu Wifi, NFC, Bluetooth, ZigBee, WLAN, BLE oder WPAN üblicherweise verwendeten Kommunikationsprotokolle sein. Proprietäre Kommunikationsprotokolle können ebenfalls zum Einsatz kommen. In diesem Fall wird der Standard durch den Hersteller eigens definiert.

Es ist auch möglich, Kommunikationsprotokolle einzusetzen, welche auf Telefax, Morsen, TCP/IP oder USB basieren.

Es ist auch möglich, dass das Handgerät und Mobilgerät über optische Signale, z. B. im sichtbaren (mittels LED) oder, wie bereits erwähnt, im infraroten Bereich miteinander kommunizieren können. Die optischen Signale können Lichtimpulse sein. So kann beispielsweise die Dauer eines optischen Signals, die Anzahl der gesendeten optischen Signale und/oder die Pausen zwischen den gesendeten optischen Signale Informationen enthalten.

Das Handgerät kann beispielsweise über eine oder mehrere LED's optische Kommunikationssignale aussenden, welche durch eine Kamera im Mobilgerät erfasst und durch das Mobilgerät interpretiert bzw. übersetzt werden.

Es ist auch möglich, dass das Handgerät und Mobilgerät über akustische Signale, wie Töne miteinander kommunizieren können. Der Empfänger, z. B. das Mobilgerät, enthält entsprechend ein Mikrofon. Die Töne zeichnen sich z. B. durch unterschiedliche Frequenzen aus. So kann beispielsweise die Dauer eines akustischen Signals, seine Frequenz, die Anzahl der gesendeten Signale und/oder die Pausen zwischen den gesendeten akustischen Signalen Informationen enthalten. Akustische Signale können eine Frequenz im nicht hörbaren Bereich, z. B. Ultraschall oder Infraschall, einnehmen, damit diese nicht störend wirken.

So können die akustischen Signale z. B. durch den Motor des Handgeräts erzeugt werden. Durch Variation der Drehzahl lässt sich zum Beispiel die Frequenz des Motorgeräuschs verändern, woraus eine Abfolge von Tönen unterschiedlicher Frequenz generiert werden kann, welche die Informationen enthält. Insbesondere kann mit dem Motor ganz gezielt ein Pfeifen produziert werden, welches zur Übertragung genutzt werden kann.

Bei der Übertragung von Signalen (unter anderem optisch oder akustisch) kann die eigentliche Datenübertragung auf dem Prinzip der Amplitudenmodulation (ASK = Amplitude Shift Keying) oder auf dem Prinzip der Frequenzmodulation (FSK = Frequecy Shift Keying) basieren. Dabei wird jeweils eine Grösse/Eigenschaft des Übertragungsmediums angepasst bzw. verändert und diese Veränderung kann durch decodieren wiederum in eine Nachricht umgewandelt werden.

Ferner kann auch eine drahtgebundene Kommunikation zwischen Mobilgerät und Handgerät vorgesehen sein. So kann z. B. die Audio-Schnittstelle, eine USB-Schnittstelle oder eine proprietäre Datenschnittstelle des Herstellers am Mobilgerät für eine drahtgebundene Kommunikation mit dem Handgerät benutzt werden. Das Handgerät besitzt in diesem Fall ebenfalls eine entsprechende Schnittstelle, wie z. B. eine Micro-USB-Schnittstelle. (Standard-Schnittstelle) oder eine Lightning-Schnittstelle (proprietäre Schnittstelle von Apple).

Die Datenübertragung zwischen Mobilgerät und Handgerät kann mit induktiven oder kapazitiven Mitteln erreicht werden.

Ferner kann die Datenübertragung an das Mobilgerät mechanisch ausgeführt werden. In diesem Fall besitzt das Mobilgerät oder eine an das Mobilgerät angeschlossene mechanische Einheit Mittel um eine mechanische Bewegung auszuführen.

Ferner verfügt das Handgerät in diesem Fall über eine Schnittstelle zur Aufnahme dieser mechanischen Bewegung. Vorzugsweise handelt es sich bei dieser Aufnahme um einen Schalter. Vorzugsweise handelt es sich dabei um den Ein-/Ausschalter des Handgerätes oder einen Schalter, um den Betriebszustand des Handgerätes zu ändern. Mittels einer bestimmten Abfolge der mechanischen Bewegung des Mobilgerätes können Daten an das Handgerät übermittelt werden, um damit Betriebsparameter, Steuerungsdaten, Benutzerdaten oder Pflegeprogramme zu verändern. Im Fall einer mechanischen Datenübertragung sind der Mikrocontroller des Datenübertragungsmoduls und der Geräteprozessor des Handgerätes insbesondere identisch.

Im Rahmen der Erfindung ist es auch möglich, dass ein bidirektionaler Datenaustausch zwischen Handgerät und Mobilgerät nicht auf den gleichen Datenübertragungstechnologien geschieht. Dabei können bidirektional alle in dieser Schrift aufgeführten Datenübertragungstechnologien miteinander kombiniert werden.

Beispiele:
- Handgerät kommuniziert optisch (z.B. LED) - Mobilgerät kommuniziert mechanisch;
- Handgerät kommuniziert akustisch (z.B. Ton) - Mobilgerät kommuniziert mechanisch;
- Handgerät kommuniziert akustisch (z.B. Ton) - Mobilgerät kommuniziert elektromagnetisch;
- Handgerät kommuniziert optisch (z.B. LED) - Mobilgerät kommuniziert elektromagnetisch.

Das Datenübertragungsmodul enthält insbesondere einen nicht-flüchtigen Speicher. Der nicht-flüchtige Speicher kann z. B. in zwei Bereiche aufgeteilt sein. Ein erster, z. B. grösserer Bereich wird zum Speichern von erfassten Daten, wie Betriebsdaten, Messwerte, Betriebsparameter oder Steuerungsdaten, Pflegeprogramme oder Benutzerdaten verwendet. Ein zweiter, z. B. kleinerer Bereich wird zum Speichern der Betriebsparameter des Datenübertragungsmoduls bzw. des dazugehörigen Mikrocontrollers verwendet.

Betriebsparameter, Steuerungsdaten, Benutzerdaten oder Pflegeprogramme können wie weiter unten beschrieben vom Mobilgerät an das Handgerät übermittelt werden.

Das Handgerät ist insbesondere dafür ausgelegt, über das Datenübertragungsmodul bidirektional und vorzugsweise drahtlos Daten mit einem elektronischen Mobilgerät auszutauschen.

Der Elektronikteil des Handgerätes kann im Weiteren einen Mikrocontroller zur Verarbeitung von Daten und zur Steuerung oder Regelung der elektrischen Körperpflegefunktion, nachfolgend Geräteprozessor genannt, enthalten. Die Daten sind z. B. Betriebsdaten, Sensordaten, Steuerungsdaten oder Benutzerdaten.

Der Geräteprozessor ist über eine oder mehrere Kommunikationsleitungen mit dem Mikrocontroller des Datenübertragungsmoduls zwecks Datenübertragung an ein Mobilgerät verbunden. Diese ist z. B. als Leiterbahn auf einer Leiterplatte ausgebildet.

In einer Ausführungsform kommunizieren Geräteprozessor und Mikrocontroller des Datenübertragungsmoduls nicht während dem Betrieb des Handgerätes. Vorzugsweise kommunizieren diese unmittelbar nach dem Betrieb des Handgerätes oder nach einer bestimmten Zeitverzögerung z.B. nach einigen Sekunden bis Minuten. Der Geräteprozessor kann mittels der oder den Kommunikationsleitung(en) gewisse Parameter für den Betrieb des Handgeräts vom Speicher des Mikrocontrollers des Datenübertragungsmoduls holen. Dabei sind die Speicherpositionen im Speicher des Mikrocontrollers klar festgelegt und entsprechend auch im Geräteprozessor hinterlegt.

Der Geräteprozessor kann einen nicht-flüchtigen Programmspeicher enthalten. Im Programmspeicher ist z. B. Die Betriebssoftware für den Geräteprozessor gespeichert. Der Programmspeicher kann z. B. ein Flash-Speicher, wie Flash-EEPROM, sein.

Dieser Speicher ist beschreibbar, sodass gewisse Parameter im Speicher geändert werden können, beispielsweise vom Benutzer veränderbare Grössen. Weiter sind im Geräteprozessor insbesondere die Standardwerte hinterlegt, die es ermöglichen, das wieder aufgeladene Handgerät auch in Betrieb zu nehmen nachdem die Energiezelle komplett entleert wurde und die benutzerdefinierten Speicherwerte deshalb verloren gegangen sind.

Der Geräteprozessor kann einen flüchtigen Arbeitsspeicher (RAM) enthalten. Dieser kann zum Speichern von temporären Daten vorgesehen sein. Solche temporären Daten können z. B. Betriebsparameter sein, welche sich während des Betriebs verändern, z. B. ein Timer für einen Einsatz oder ein Zonen-Timer für verschiedene Einsatzzonen des Handgerät zur Körperpflege. Bei einer Zahnbürste kann dies z. B. ein Quadranten-Timer für die Quadranten des Gebisses sein.

Bei einem Gesichtspflege-Gerät kann dies z. B. ein 3-Zonen-Timer für die beiden Wangen und die Stirn sein. Ein solcher Speicher zeichnet sich gegenüber nicht-flüchtigen Speichern durch kurze Zugriffzeiten aus.

Der Geräteprozessor kann einen nicht-flüchtigen beschreib- und lesbaren (permanenten) Datenspeicher, z. B. ein EEPROM, enthalten. Dieser dient z. B. der Speicherung von Betriebs- und Sensordaten, von Betriebsparametern sowie Steuerungsdaten. So kann der nicht-flüchtige Datenspeicher Standard- bzw. Default-Werte für den Betrieb des Handgeräts enthalten.

Der Mikrocontroller des Datenübertragungsmoduls kann dafür ausgelegt sein, dass dieser jeweils nur über eine Schnittstelle, d.h. nicht über mehrere Schnittstellen gleichzeitig kommunizieren kann. So kann die Kommunikationsverbindung zum Geräteprozessor über eine erste Schnittstelle führen. Die erste Schnittstelle kann beispielsweise ein serieller Datenbus, wie eine PC-Schnittstelle (Inter-Integrated Circuit), sein. Die Kommunikationsverbindung zum HF-Teil bzw. zur Antenne kann über eine zweite Schnittstelle führen.

Dies bedeutet, dass der Mikrocontroller des Datenübertragungsmoduls beim Senden oder Empfangen von Daten nicht gleichzeitig mit dem Geräteprozessor kommunizieren kann. Entsprechend können vom Mikrocontroller des Datenübertragungsmoduls während einer vorzugsweise drahtlosen Datenübertragung keine Daten an den Geräteprozessor übermittelt werden und umgekehrt.

Im Weiteren kann der Mikrocontroller des Datenübertragungsmoduls keine Daten empfangen oder senden, wenn dieser mit dem Geräteprozessor kommuniziert. Da während des Betriebes des Handgerätes laufend Betriebs- und/oder Sensordaten vom Geräteprozessor an den nicht-flüchtigen Speicher des Datenübertragungsmoduls übermittelt werden, können während des Betriebs keine Daten Empfangen und gesendet werden.

Deshalb ist das Handgerät insbesondere dafür ausgelegt sein, dass die Kommunikation zwischen Mobilgerät und Handgerät nur stattfinden kann, wenn das Handgerät nicht in Betrieb ist. Das heisst, eine Kommunikation zwischen Mobilgerät und Handgerät ist nicht möglich, wenn das Handgerät in Betrieb ist. "In Betrieb sein" bedeutet, dass das oder ein elektrisches Funktionsorgan aktiviert ist.

Andererseits kann das Handgerät nicht in Betrieb genommen werden, d.h. das oder ein elektrisches Funktionsorgan kann nicht aktiviert werden, wenn das Mobilgerät und das Handgerät miteinander kommunizieren.

Der Mikrocontroller des Datenübertragungsmoduls kann z. B. dazu ausgelegt sein, zwecks Aufbau einer Kommunikationsverbindung mit dem Mobilgerät, den Geräteprozessor in einen Zustand zu versetzen, z. B. durch Deaktivierung, in welchem die Kommunikation mit einem Mobilgerät möglich ist.

Der Aufbau der Kommunikation zwischen dem Datenübertragungsmodul und dem Geräteprozessor ist daher zweckmässig so eingerichtet, dass jeweils das Datenübertragungsmodul nur über eine Schnittstelle kommunizieren kann, weil ansonsten die Möglichkeit besteht, dass Daten korrumpiert werden. Dies kann beispielsweise dazu führen, dass Benutzer-Anwendungsdaten nicht korrekt sind, oder dass Betriebsparameter des Handgeräts falsch eingestellt werden und in der Folge das Gerät nicht mehr betriebsfähig ist.

Alternativ ist es möglich, dass die Kommunikation mit dem Mobilgerät auch stattfinden kann, wenn das Handgerät in Betrieb ist. Somit ist mindestens mit gewissen Kommunikationstechnologien, wie z. B. Bluetooth, insbesondere Bluetooth Low Energy (BLE), Wireless Personal Area Network (WPAN), z. B. ZigBee, WLAN oder Wifi via WLan eine Echt-Zeit-Übermittlung von Daten möglich.

Es kann vorgesehen sein, dass Daten vom Geräteprozessor zur Übertragung an das Mobilgerät beispielsweise vorgängig im nicht-flüchtigen, d.h. permanenten Speicher des Datenübertragungsmoduls gespeichert und zwecks drahtlosen Übertragung an ein Mobilgerät aus diesem Speicher wieder ausgelesen werden. So können Daten, wie Betriebs- und Sensordaten, welche an das Mobilgerät zu übermitteln sind, z. B. vor ihrer Übermittlung vom Geräteprozessor an das Datenübertragungsmoduls übermittelt und auf den permanenten Speicher des Datenübertragungsmoduls geschrieben werden. Dies geschieht beispielsweise während des Betriebs des Handgeräts oder am Ende des Betriebs.

Daten, welche das Datenübertragungsmodul, z. B. vom Mobilgerät, empfängt, werden z. B. im permanenten Speicher des Datenübertragungsmoduls gespeichert. Die Daten können vom permanenten Speicher wieder ausgelesen und an den Geräteprozessor zur weiteren Verwendung übermittelt werden.

Der permanente Speicher des Datenübertragungsmoduls kann also unter anderem als Zwischenspeicher dienen, um so die abwechselnde Kommunikation des Mikrocontroller des Datenübertragungsmoduls mit einem externen Mobilgerät und dem internen Geräteprozessor zu ermöglichen.

Die Kommunikation mit dem externen Mobilgerät ermöglicht beispielsweise nur den Austausch von Daten die im Speicher des Datenübertragungsmoduls hinterlegt sind. Jegliche Daten die ausgetauscht werden, müssen vorgängig im Speicher des Datenübertragungsmoduls hinterlegt sein.

Weitere Details zur Funktionalität zwischen Handgerät und Mobilgerät folgen weiter unten im Zusammenhang mit der ebenfalls beanspruchten Funktionseinheit aus Handgerät und Mobilgerät.

Die Antenne kann direkt mit dem Mikrocontroller des Datenübertragungsmoduls verbunden sein. Der Geräteprozessor und der Mikrocontroller können auf einer gemeinsamen Leiterplatte, auch Platine genannt, angeordnet sein. Die Antenne des Datenübertragungsmoduls kann ebenfalls auf der gemeinsamen Leiterplatte angeordnet sein. Die permanenten Speicher des Geräteprozessors und/oder des Mikrocontrollers bzw. des Datenübertragungsmoduls können ebenfalls auf der gemeinsamen Leiterplatte angeordnet sein. Die Leiterplatte mit den genannten Komponenten kann Teil einer weiter unten näher beschriebenen Montageeinheit sein.

Der Mikrocontroller des Datenübertragungsmoduls und Geräteprozessor können eine Einheit bilden und insbesondere auf einer gemeinsamen Platine angeordnet sein.

Die Antenne kann so angeordnet sein, dass die Leiterkreise erst nach erfolgter Montage im Gerätegehäuse geschlossen werden. Dies geschieht beispielsweise durch entsprechend ausgestaltete Kontaktelemente. Die Kontaktelemente können im Handgerät z. B. derart ausgestaltet und angeordnet sein, dass diese eine sichere Kontaktierung gewährleisten.

Die Antenne kann eine Spule mit einer Mehrzahl von Windungen aus Kupferdraht enthalten. Die Spule kann 10 bis 30 Windungen, vorzugsweise 15 bis 20 Windungen, umfassen.

Die Anzahl der Windungen wird vorzugsweise so angepasst, dass die angegebene Resonanzfrequenz erreicht wird. Dies ist abhängig von der Induktivität und vom Strom. Die Induktivität der Antenne/Spule im Fall der NFC Anwendung beträgt 4.7 MikroHenry und ergibt sich aus der Anzahl Windungen und den Materialeigenschaften des Ferritkerns.

Der Kupferdraht kann einen Durchmesser von 0.2 bis 1.2 mm, vorzugsweise 0.4 bis 1 mm, aufweisen.

Die Antenne kann einen Spulenkern beziehungsweise Ferritkern mit einer Länge von 10 bis 40 mm, vorzugsweise 15 bis 25 mm enthalten.

Die Antenne kann einen Spulenkern, beziehungsweise Ferritkern, mit einem Durchmesser von 1 bis 8 mm, vorzugsweise 2 bis 4 mm enthalten.

Die Auslegung einer Ferrit-Antenne ist so gewählt, dass diese möglichst nahe bei der Resonanzfrequenz liegt.

Die elektrischen Eigenschaften der Antenne sind insbesondere auf den Prozessor, insbesondere den NFC-Prozessor, abgestimmt.

Der Elektronikteil des Handgerätes kann im Weiteren eine Energiezelle, wie eine Batterie zur Versorgung des Geräteprozessors sowie des elektrischen Funktionsorgans mit Strom enthalten.

Der Begriff "Batterie" umfasst definitionsgemäss sowohl Primärzellen als auch die bevorzugten Sekundärzellen und ist grundsätzlich auch mit dem Begriff Energiezelle gleichzusetzen.

Das Handgerät enthält z. B. eine wieder verschliessbare Aufnahmekammer zur Aufnahme der Energiezelle, insbesondere der Batterie.

Die Sekundärzelle, auch Akku genannt, sowie das Handgerät können so ausgebildet sein, dass der Akku zum Aufladen an einem externen Ladegerät, auch Ladestation genannt, dem Handgerät bzw. aus der Aufnahmekammer entnommen und wieder eingesetzt werden kann.

Auf dieselbe Weise können auch Primärzellen in das Handgerät bzw. in die Aufnahmekammer eingesetzt und diesem wieder entnommen werden. Dies jedoch mit dem Unterschied, dass die Primärzellen lediglich ausgetauscht werden.

Der Akku kann auch fest im Handgerät installiert sein. "Fest installiert" bedeutet, dass der Akku zum Aufladen nicht aus dem Handgerät entnommen werden muss. In diesem Fall erfolgt das Laden des Akkus vorzugsweise mittels kontaktloser Energieübertragung. Die kontaktlose Energieübertragung ist insbesondere eine induktive Energieübertragung. In diesem Falle enthält das Handgerät, insbesondere der Griffkörper, eine mit der Sekundärzelle verbundene Induktionsspule. Die Sekundärzelle kann auf diese Weise ohne Entnahme aus dem Handgerät an einem externen Ladegerät kontaktlos aufgeladen werden. Hierzu wird das Handgerät zum Ladegerät geführt. Das Ladegerät, welches zum Beispiel als Ladestation ausgebildet ist, kann eine Steckaufnahme aufweisen, in welche das Handgerät unter Ausbildung einer, z. B. lockeren Steckverbindung, eingesteckt werden kann.

Das elektrische Funktionsorgan des Handgerätes kann sein:
- ein elektromotorischer Antrieb zur mechanischen Bewegung, eines Körperpflegeelements. Die mechanische Bewegung kann insbesondere eine Rotation, eine Oszillation, ein Schwenken oder eine Vibration sein;
- eine Pumpe zum Fördern eines Fluids, wie Flüssigkeit oder Gas. Die Pumpe kann beispielsweise zum Fördern einer Flüssigkeit, wie Wasser oder einer wasserhaltigen Flüssigkeit, für eine Munddusche sein. Ferner kann die Pumpe auch zum Fördern einer Flüssigzahnpasta oder auch von Mundwasser dienen. Ferner kann die Pumpe zum Zerstäuben einer Pflegeflüssigkeit dienen;
- eine Schneideinrichtung zum Schneiden, insbesondere Rasieren oder Trimmen, von Haaren, z. B. Barthaaren. Die Schneideinrichtung kann z. B. eine Rasierklinge umfassen;
- eine Einrichtung zum Zupfen von Haaren zur Haarentfernung;
- eine Ionisierungseinrichtung zur Erzeugung eines Stromflusses im Körper oder auf der Haut des Benutzer durch Ionisierung;
- eine Ultraschalleinrichtung für die Ultraschalldiagnostik;
- eine Einrichtung zur Erzeugung von Licht, z. B. UV-(Ultraviolett)-Licht. Dieses kann zum Beispiel der Desinfektion von Körperpflegeelementen, wie Bürsten, dienen;
- eine elektrische Heizung zum Heizen eines Körperpflegeelements;
- eine elektrische Kühleinrichtung zum Kühlen eines Körperpflegeelements.

Das elektrische Funktionsorgan kann auch zwei oder mehr als zwei der oben genannten Funktionen aufweisen.

Das Handgerät kann ferner auch ein oder mehrere, insbesondere der oben genannten elektrischen Funktionsorgane und die dazugehörige Funktionalität umfassen. Diesbezüglich sind die oben beispielhaft genannten elektrischen Funktionsorgane auch beliebig miteinander kombinierbar.

Der Griffkörper und der Pflegeteil können separat ausgebildet sein und miteinander verbindbar sein. Der Pflegeteil kann zum Beispiel auf den Griffkörper aufsteckbar oder einschnappbar sein. Der Griffkörper und der Pflegeteil können auch einteilig ausgebildet sein.

Das Körperpflegeelement ist Bestandteil des Pflegeteils und kann eine Bürste bzw. ein Bürstenkopf, ein Massageelement bzw. ein Massagekopf, ein Düsenkopf, eine Fluidspendeeinheit oder eine Rasierklinge bzw. ein Klingenkopf sein. Das Körperpflegeelement kann ein lösbarer oder integraler Teil des Pflegeteils sein.

Der Griffkörper kann ein Gehäuse enthalten, welches einen Aufnahmeraum ausbildet. Das Gehäuse ist insbesondere aus Kunststoff. So kann das Gehäuse in einem Spritzgiessverfahren hergestellt werden.

Das Gehäuse kann z. B. mittels eines Mehrkomponenten-Spritzgiessverfahrens hergestellt sein. Die Gehäusewand kann insbesondere mehrschichtig, z. B. zweischichtig oder dreischichtig, aufgebaut sein. So kann das Gehäuse in zwei oder mehreren Spritzgiessschritten hergestellt sein. Das Gehäuse kann aus einem oder mehreren, verschiedenen Kunststoffen hergestellt sein. So kann die mehrschichtige Gehäusewand aus einem oder mehreren verschiedenen Kunststoffen hergestellt sein. Die Mehrschichtigkeit kann z. B. bereichsweise sein und muss insbesondere nicht an allen Gehäusebereichen gegeben sein.

Weiter ist es möglich, das Gehäuse aus mehreren, insbesondere aus wenigstens zwei, schalenförmigen Gehäuseteilen herzustellen. Die einzelnen Schalen werden beispielsweise wiederum im Mehrkomponenten-Spritzgiessverfahren hergestellt. Die Verbindung der Schalen kann mittels der gängigen Verbindungstechnologien passieren, beispielsweise mittels Umspritzen im Spritzgiessverfahren, Kleben, Schweissen, z.B. Ultraschallschweissen.

Es ist beim beschriebenen schalenförmigen Aufbau des Gehäuses insbesondere möglich, dass kein Verschlussdeckel für das Gerät benötigt wird, weil der Aufbau des Geräts so ist, dass der Aufnahmeraum mit dem Verbinden der Schalen abgeschlossen wird. Das Abschliessen wird dabei durch die schalenförmigen Gehäuseteile und allenfalls auch durch weitere Elemente, welche auf den Verbindungslinien /Verbindungsflächen oder in Ausnehmungen in den Schalen angeordnet sind, erzeugt.

Das Gehäuse des Griffkörpers kann hohlzylinderförmig ausgebildet sein. An jenem Ende des Gehäuses, welches dem Pflegeteil entgegen gesetzt angeordnet ist, kann der Aufnahmeraum mit einem Verschlussdeckel verschliessbar sein. Der Aufnahmeraum des Gehäuses kann mittels Verschlussdeckel über eine Schraub- oder BajonettVerbindung verschlossen werden. Der Verschlussdeckel kann z. B. eine Schraubkappe sein.

Jenes Ende des Gehäuses, an welchem das Pflegeteil anschliesst, kann ebenfalls offen sein. Diese Gehäuseöffnung kann beispielsweise über Elemente einer Trägerstruktur, welche durch die Gehäuseöffnung hindurch ragt, abgeschlossen sein. Dichtungen an der Trägerstruktur können das Gehäuse zusätzlich abdichten.

Gehäuse der oben beschriebenen Art können bei allen genannten Handgeräten zur Körperpflege eingesetzt werden.

Eine oder mehrere der folgenden Komponenten können insbesondere im Aufnahmeraum des Gehäuses angeordnet sein:
- der Elektronikteil, z. B. mit dem Geräteprozessor und Mikrokontroller des Datenübertragungsmoduls;
- ein oder mehrere elektrische Funktionsorgane oder Teile davon und zugehörige mechanische Komponenten;
- die Energiezelle;
- falls vorgesehen: Sensoren zur Erfassung von Messwerten;
- falls vorgesehen: die Induktionsspule.

Die Induktionsspule ist insbesondere an jenem dem Pflegeteil entgegen gesetzt liegenden Ende des Gehäuses, insbesondere, falls vorhanden, nahe an der Verschlussöffnung, angeordnet.

Die oben genannten Komponenten können z. B. durch eine Verschlussöffnung, welche z. B. durch den Verschlussdeckel verschliessbar ist, eingeschoben werden. Die Verschlussöffnung bildet also eine Einschuböffnung, z. B. für eine Montageeinheit, aus. Die Verschlussöffnung kann somit sowohl für die Montage wie auch für die spätere Reparatur oder auch die Demontage benutzt werden.

Ist das Gehäuse wie oben beschrieben aus mehreren schalenförmigen Gehäuseteilen aufgebaut, so findet die Montage der genannten Komponenten z. B. in einer oder mehreren Schalen statt, bevor diese miteinander verbunden werden.

Die Elektronikeinheit kann zusammen mit dem elektrischen Funktionsorgan als Montageeinheit ausgebildet sein. Ist der Akku fest im Gehäuse installiert, so kann auch der Akku Teil der Montageeinheit sein. Erfolgt die Energieübertragung zum Aufladen des Akkus induktiv, so kann auch die dazugehörige Induktionsspule Teil der Montageeinheit sein.

Die genannten Komponenten der Montageeinheit können auf einer Trägerstruktur montiert sein. Die Trägerstruktur kann aus Kunststoff sein. Die Trägerstruktur kann ein- oder mehrteilig sein.

Wird die Montageeinheit durch die Verschlussöffnung in das Gehäuse eingeschoben, so ist diese als Einschubeinheit, auch Einschubmodul genannt, ausgebildet.

Beim Aufbau des Gerätes durch die genannten schalenförmigen Gehäuseteile kann die Montageeinheit als Einlegeeinheit ausgebildet sein, welche in das Gehäuse eingelegt wird.

Gemäss einer besonderen Ausführungsvariante enthält das Handgerät einen elektromotorischen Antrieb zur Ausübung einer elektrischen betriebenen Körperpflegefunktion. Der elektromotorische Antrieb wird vom Geräteprozessor gesteuert.

Der elektromotorische Antrieb kann insbesondere ein Bürstenmotor, ein bürstenloser Motor, ein Piezomotor oder ein Schwingankermotor sein.

Der elektromotorische Antrieb weist eine bestimmte Motorengeschwindigkeit auf. Diese gibt an, mit welcher Drehzahl die Motorwelle des elektromotorischen Antriebs an seinem Ausgang dreht. Direkt auf diese Motorengeschwindigkeit abgestellt ist die Geschwindigkeit, die für das Pflegeteil bzw. für das Körperpflegeelement zur Verfügung steht, nachdem allenfalls Getriebestufen und/oder Übersetzungen durchlaufen sind. Diese Geschwindigkeit wird nachfolgend Anwendungsgeschwindigkeit genannt. Die Anwendungsgeschwindigkeit entspricht der Geschwindigkeit einer mechanischen Bewegung des Körperpflegeelements. Dies kann z. B. eine Rotation, eine Oszillation, ein Schwenken oder eine Vibration sein. Die Anwendungsgeschwindigkeit kann z. B. bei einer Zahnbürste eine Reinigungsgeschwindigkeit sein.

Der Schalter zur Aktivierung des Handgeräts kann insbesondere ein mechanischer Schalter (mechanische Drucktaste, Kippschalter, etc.), ein Piezoschalter, ein kapazitiver Schalter oder auch ein optischer Schalter sein.

Der elektromotorische Antrieb, insbesondere zur Betätigung des Pflegeteils, und die Antenne des Datenübertragungsmoduls können im Griffkörper angeordnet sein. Der elektromotorische Antrieb und die Antenne sind beispielsweise in einem Abstand von mindestens 2 cm zueinander angeordnet. Dadurch übt der Magnet des elektromotorischen Antriebs keinen störenden Einfluss auf die Antenne aus.

Durch die Beabstandung des Motors von der Antenne wird zusätzlich erreicht, dass das Mobilgerät nicht allzu nahe an eine magnetische Quellen gelangt. Damit kann das Risiko vermindert werden, dass die magnetische Quelle beispielsweise den Speicher im Mobilgerät löscht, oder dass Parameter des Mobilgeräts durch das Magnetfeld umprogrammiert werden.

Die Antenne kann radial um die Energiezelle angeordnet sein, welche ebenfalls im Griffkörper angeordnet sein kann. Antenne und Energiezelle können einen Abstand voneinander von 1 mm oder mehr aufweisen. Zwischen Antenne und dem Gehäuse der Energiezelle kann eine Isolation, insbesondere eine Luftisolation vorliegen.

In der Anordnung radial zur Energiezelle kann auch eine gebogene Antenne angebracht werden, welche beispielsweise mindestens teilweise um die Energiezelle angeordnet ist.

Der elektromotorische Antrieb ist insbesondere in einem oberen, dem Pflegeteil zugewandten Abschnitt des Griffkörpers angeordnet. Die Antenne des Datenübertragungsmoduls ist insbesondere in einem unteren, dem Pflegeteil abgewandten Abschnitt des Griffkörpers angeordnet. Die Antenne des Datenübertragungsmoduls kann auch in einem mittleren, dem Pflegeteil abgewandten Abschnitt des Griffkörpers angeordnet sein.

Die Antenne kann zwecks Erzielen hoher Feldstärken eine Ferritantenne sein. Der Spulenkern ist insbesondere in Längsrichtung des Handgeräts ausgerichtet. Der Spulenkern kann auch senkrecht oder schräg zur Längsrichtung des Handgeräts ausgerichtet sein. Die Antenne kann auch als Luftspule ohne Ferritkern ausgebildet sein. Die Antenne kann koaxial zur Energiezelle oder zum elektromotorischen Antrieb ausgerichtet sein.

Die Antenne kann auch ein Teil der Induktionsspule zum Laden der Energiezelle d.h. der Sekundärzelle sein.

Die Antenne kann auch flächenförmig ausgebildet sein. Die Antenne bzw. deren elektrisch leitenden Teile können z. B. in Folienform vorliegen. Eine folienförmige Antenne kann in einer nicht ebenen Form, z.B. gewölbt, im Gehäuse des Handgeräts platziert sein.

Die Antenne kann etikettenförmig bzw. als Etikette ausgebildet sein. Die Antenne kann insbesondere als "NFC-Tag" ausgebildet sein. Die Folienform bzw. Etikettenform eignet sich insbesondere für das Einlegen in eine Ausnehmung. Diese Ausnehmung kann in einem Gehäuse des Handgeräts, insbesondere des Griffkörpers, vorgesehen sein.

Die Antenne kann Windungen aufweisen. Die Antenne kann auch linear aufgebaut sein.

Die Antenne kann z. B. aus Leiterbahnen ausgebildet werden, welche auf einer Leiterplatte angeordnet sind. Die Antenne kann auch auf der Leiterplatte montiert sein. Es kann sich dabei um dieselbe Leiterplatte handeln auf der sich auch der Mikrocontroller des Datenübertragungsmoduls befindet.

So kann die Antenne als so genanntes SMD-Bauelement (surface-mounted device, deutsch: oberflächenmontiertes Bauelement) auf der Leiterplatte montiert sein. Die Antenne kann z. B. eine Patch-Antenne oder PIF-Antenne sein.

Die Antenne kann über eine Stoffschluss-, Kraftschluss- und/oder Formschlussverbindung an einem der folgenden Komponenten des Handgeräts befestigt sein:
- am Gehäuse, insbesondere am Gehäuse des Griffkörpers;
- am Verschlussdeckel;
- an einer Montageeinheit, wie weiter oben beschrieben;
- an der Trägerstruktur einer Montageeinheit, wie weiter oben beschrieben.

Die Stoffschlussverbindung kann eine Klebeverbindung sein oder durch Vergiessen in Kunststoff hergestellt werden.

Das Gehäuse kann im Bereich der Antenne lichtdurchlässig sein. Das Gehäuse kann zum Beispiel ein Sichtfenster enthalten. Dadurch kann der Benutzer die Position der Antenne am Handgerät visuell lokalisieren. Dies erlaubt ihm, das Mobilgerät für die Datenübermittlung möglichst optimal zu positionieren.

Es ist auch möglich, die Position der Antenne mittels einer Beleuchtung von aussen visuell sichtbar zu machen. Die Beleuchtung kann im Gehäuse bzw. im Aufnahmeraum des Gehäuses integriert sein. Dies kann unabhängig von der Präsenz eines Sichtfensters geschehen.

Ferner können auch aussen auf der Oberfläche des Gehäuses visuell oder taktil wahrnehmbare Symbole zur Lokalisierung der Antenne angebracht sein. Dies kann beispielsweise durch Spritzgiessen, Bedrucken oder Bekleben des Gehäuses geschehen. Beim Symbol kann es sich z.B. um ein NFC Symbol handeln.

Damit erkennt der Benutzer die Lage der Antenne zur optimalen Positionierung des Mobilgerätes gegenüber dem Handgerät zur Datenübertragung. Dies ist insbesondere beim Einsatz von NFC-Technologie mit geringer Reichweite von Bedeutung. So können z.B. eine oder mehrere LED's am Handgerät aufleuchten oder der elektromotorische Antrieb kann sich kurz einschalten (z.B. weniger als eine Sekunde), um die Herstellung der drahtlosen Verbindung anzuzeigen.

Ferner kann auch vorgesehen sein, dass das Mobilgerät oder das Handgerät bei Erreichen einer optimalen Position des Mobilgeräts gegenüber dem Handgerät ein Signal abgibt. Das Signal kann akustisch, visuell oder taktil wahrnehmbar sein. Anschliessend kann der Benutzer die Datenübertragung mittels Mobilgerät starten.

Die Antenne kann wie erwähnt z. B. im Bereich des Gehäuses des Handgeräts, insbesondere des Griffkörpers angeordnet sein. Eine flächenförmige Antenne kann zwecks Anpassung an die Gehäuseform bzw. an die Platzverhältnisse im Gehäuse gebogen, z. B. gerollt, sein. Eine flächenförmige Antenne ist jedoch bevorzugt möglichst nicht oder nur wenig gebogen, um eine genügend hohe Antennenleistung zu gewährleisten.

Die, beispielsweise flächenförmig ausgebildete, Antenne des Datenübertragungsmoduls kann eine der nachfolgenden Anordnungen aufweisen:
- eine Anordnung unmittelbar an der Innenseite der Gehäusewand;
- eine Anordnung unmittelbar an der Aussenseite der Gehäusewand;
- eine Anordnung zwischen zwei Schichten einer mehrschichtig aufgebauten Gehäusewand;
- eine in die Gehäusewand integrierte Anordnung.

Das Gehäuse kann im Bereich der Antenne dünnwandiger ausgebildet sein als in den übrigen Bereichen. Das Gehäuse besteht zumindest im Bereich der Antenne insbesondere aus einem nicht-konduktiven Material, wie Kunststoff. Das Gehäuse enthält insbesondere auch keine konduktiven Komponenten, zumindest im Bereich der Antenne damit das Feld nicht gestört ist. Störende Elemente können beispielsweise auf das Gehäuse geklebte Filets oder aufgeprägte Metallfolien sein.

Weiter ist es möglich, das Gehäuse im Bereich der Antenne aus einem Material zu gestalten, das für die Kommunikation bessere Eigenschaften aufweist als das Material welches in anderen Bereichen des Gehäuses eingesetzt wird.

Die Antenne kann beispielsweise als Einlegeteil während der Herstellung des Griffkörpers bzw. des Gehäuses mittels eines Spritzgiessschrittes mit Kunststoff umspritzt werden und so in die Gehäusewand des Griffkörpers integriert werden. Die Antenne kann auch in gleicher Weise im Verschlussdeckel integriert sein.

Ferner ist es auch möglich, dass die Antenne separat montiert wird. So kann die Antenne in eine Vertiefung bzw. Ausnehmung in der Innenwand des Gehäuses, insbesondere des Gehäuses des Griffkörpers, oder des Verschlussdeckels montiert werden. Die Vertiefung bzw. Ausnehmung kann mit einer Abdeckung permanent oder wieder verschliessbar verschlossen sein. Die Antenne kann auch in die Vertiefung eingegossen oder eingeklebt sein. Die Vergussmasse kann ein Kunststoff bzw. ein Klebstoff sein.

Die Antenne wird bevorzugt möglichst nahe zur Gehäusewand angeordnet, damit die Übertragung durch die Gehäusewand besser ist. Durch die Anordnung nahe zur Gehäusewand ist die Reichweite des Feldes der Antenne ausserhalb des Gehäuses grösser.

Durch die Anordnung der Antenne nahe zur Gehäusewand wird ein weiterer positiver Punkt erreicht. Die Antenne ist, von der Gehäusewand her gesehen, nicht von anderen Bauteilen im Gehäuse verdeckt.

Die Antenne ist im oder am Gehäuse, insbesondere im Gehäuse des Griffkörpers, bevorzugt so angeordnet, dass diese auf jene Seite weist, welche in der stabilen Lage des Handgerätes auf einer Auflagefläche nicht der Auflagefläche sondern dem Benutzer zugewandt ist. Die Antenne weist zum Beispiel zur Oberseite der Zahnbürste hin.

Die Antenne kann auf der Seite des Ein-/Ausschalters liegen. Die Antenne kann in der Nähe des Ein-/Ausschalters liegen. Die Antenne kann auf der Seite eines Pflegekopfes hegen.

Das erfindungsgemässe Handgerät zur Körperpflege erlaubt, wie weiter unten noch näher erläutert, den Einsatz einer Vielzahl von Sensoren zur Erfassung von Messwerten, welche z. B. Aufschluss über den Betrieb des Handgerätes geben. So kann das Handgerät einen oder mehrere Sensoren zum Erfassen von einer oder mehreren Messgrössen enthalten.

So kann z. B. ein Sensor zum Ermitteln eines Anpress-Druckes, der Lage, bzw. Position des Handgerätes, einer Temperatur, des Pulses oder eines pH-Wertes vorgesehen sein.

Ferner kann auch ein Biosensor z.B. zur Ermittelung von Bakterien, Plaque, Geruch oder Krankheiten vorgesehen sein.

Ferner kann auch ein optischer Sensor, z.B. zur Ermittlung der Reinigungsleistung oder der Oberflächenbeschaffenheit vorgesehen sein.

Ferner kann auch ein Zeitnehmer zur Ermittlung der Gebrauchsdauer vorgesehen sein.

Mit den ermittelten Daten und Messwerten lassen sich Auswertungen durchführen, welche dem Benutzer aufschlussreiche Informationen, z. B. über das Pflegeverhalten, geben können. Die Auswertungen können statistische Auswertungen, wie Ermittlung von Durchschnittswerten, Ermittlung von minimal und/oder maximal Werten sein.

Ferner können die ermittelten Messwerte auch dazu dienen, Hinweise zur Optimierung/Verbesserung des Pflegeverhaltens abzugeben. Ferner können die Parameter zum Betrieb des Handgeräts aufgrund der ermittelten Daten und Messwerten auf den individuellen Benutzer angepasst werden.

Die Auswertungen der Daten und Messwerte können z. B. in einem vorgegebenen Rahmen möglich sein. Das heisst, es sind gewisse vorgegebene Standard-Auswertungen möglich. Die Auswertungen können beispielsweise über bestimmte Zeiträume gemacht werden, welche z. B. vom Benutzer gewählt werden können.

Das elektrische Handgerät zur Körperpflege kann beispielsweise ein elektrisches Mundhygienegerät, wie eine elektrische Zahnbürste, ein elektrischer Flosser, ein elektrisches Zahnfleischmassage-Gerät, ein elektrischer Interdentalreiniger oder eine elektrische Munddusche sein.

Das elektrische Handgerät zur Körperpflege kann beispielsweise ein elektrischer Nassrasierer sein.

Das elektrische Handgerät zur Körperpflege kann beispielsweise ein elektrischer Trockenrasierer.

Das elektrische Handgerät zur Körperpflege kann beispielsweise ein elektrisches Kosmetikgerät, insbesondere ein Mascara-Applikator, wie Mascara-Bürste, oder ein Nagellackpinsel sein.

Das elektrische Handgerät zur Körperpflege kann beispielsweise ein elektrisches Gesichtspflege-Gerät sein.

Das elektrische Gesichtspflege-Gerät kann zum Beispiel ein elektrisches Gesichtsreinigungs-Gerät sein.

Das elektrische Gesichtspflege-Gerät kann zum Beispiel ein Gesichtsmassage-Gerät sein.

Das elektrische Gesichtspflege-Gerät kann auch eine Kombination von Gesichtsreinigungs- und Gesichtsmassage-Gerät sein.

Das elektrische Gesichtspflege-Gerät kann insbesondere eine elektrische Gesichtsbürste sein.

Das elektrische Handgerät zur Körperpflege kann beispielsweise ein elektrisches Körperpflege-Gerät zur Pflege von Hautpartien am Körper sein. Das Körperpflege-Gerät kann zum Beispiel zum Pflegen der Füsse, der Beine, der Arme des Bauches oder des Rückens sein.

Das elektrische Körperpflege-Gerät kann ein Körpermassage-Gerät sein.

Das elektrische Körperpflege-Gerät kann ein Körperreinigungsgerät sein.

Das elektrische Körperpflege-Gerät kann auch eine Kombination von Körperreinigungs- und Körpermassage-Gerät sein.

Der Pflegeteil des elektrischen Körperpflege-Geräts kann z. B. ein Massagekopf und/oder ein Reinigungskopf sein. Der Pflegeteil kann zum Beispiel ein Bürstenkopf sein.

Das Pflegeteil des Gesichtspflege-Geräts kann ein Massagekopf und/oder ein Reinigungskopf sein. Das Pflegeteil kann zum Beispiel ein Bürstenkopf mit einer Massagebürste sein. So kann mittels der Massagebürste eine Pflege-Creme in die Haut einmassiert werden. Das Gesichtspflege-Gerät kann neben einer Massagefunktion auch eine Gesichtsreinigungsfunktion beinhalten.

Das Gesichtspflege-Gerät wie auch das Körperpflege-Gerät können dazu ausgelegt sein, dass für unterschiedliche Pflegeschritte unterschiedliche Pflegeköpfe aufgesteckt werden können. Dies kann z. B. ein Massagekopf mit Massagenoppen oder eine Bürstenkopf zum Einmassieren einer Creme mittels einer Bürste sein. Die verschiedenen Pflegeköpfe weisen dabei zum Pflege-Gerät kompatible Verbindungsschnittstellen auf.

Das Handgerät, z. B. eine Zahnbürste, ein Gesichtspflege-Gerät oder ein Körperpflege-Gerät, kann zur Erfassung von betriebsrelevanten Messwerten ein oder mehrere Sensoren enthalten. Dies können beispielsweise folgende Sensoren sein:
- ein Gyrosensor, Accelerometer bzw. Beschleunigungssensor zur Messung von Beschleunigungen des Handgeräts;
- ein Lagesensor zur Messung der Lage bzw. Position des Handgerätes;
- ein Bewegungssensor zur Messung der Bewegung des Handgerätes;
- ein pH-Sensor zur Messung des pH-Wertes im Mundbereich;
- ein Temperatursensor zur Messung einer Körpertemperatur bzw. der Hauttemperatur;
- ein Feuchtigkeitssensor zur Messung der Hautfeuchtigkeit oder zur Messung der Feuchtigkeit des Körperpflegeteils bzw. Pflegekopfes, insbesondere des Bürstenkopfes;
- ein Mundgeruchsensor;
- ein Drucksensor zur Messung des Anpressdrucks des Körperpflegeteils bzw. Pflegekopfes, z. B. an die Haut oder an die Zähne;
- ein Puls-Sensor, zum Feststellen des Pulses des Benutzers;
- ein Blutdrucksensor zum Feststellen des Blutdruckes des Benutzers;
- einen Näherungs- oder Berührungssensor zum Feststellen, wann der Kontakt vom Körperpflegeteil bzw. Pflegekopf zu den Zähnen, zur Haut oder zu einem anderen Körperteil hergestellt wird.

Dient das Handgerät nicht der Mundhygiene, so können natürlich die entsprechenden Sensoren zur Ermittlung von Messgrössen im Mundbereich entfallen.

Gemäss einer besonderen Ausführungsvariante ist das Handgerät eine elektrische Zahnbürste. Die elektrische Zahnbürste enthält einen Griffkörper und ein Pflegeteil. Das Pflegeteil enthält einen Behandlungskopf. Der Behandlungskopf dient der Pflege und/oder Reinigung der Zähne. Der Behandlungskopf ist zum Beispiel als Bürstenkopf ausgebildet. Der Pflegeteil kann insbesondere aufsteckbar sein.

Die Zahnbürste enthält eine Vorderseite, auch Oberseite genannt. Die Vorderseite entspricht jener Seite der Zahnbürste, zu welcher hin das Borstenfeld des Bürstenkopfes gerichtet ist.

Die Zahnbürste enthält ferner eine Rückseite, auch Unterseite genannt. Die Rückseite ist die der Vorderseite bzw. dem Bürstenfeld entgegengesetzte Seite.

Gemäss einer weiteren besonderen Ausführungsvariante ist das Handgerät ein Gesichtspflege-Gerät.

Das Gesichtspflege-Gerät enthält einen Griffkörper und ein Pflegeteil mit einem Pflegekopf, auch Behandlungskopf genannt. Der Behandlungskopf kann zur Massage des Gesichts ausgelegt sein. Der Behandlungskopf kann alternativ oder zusätzlich zur Reinigung des Gesichts ausgelegt sein. Der Behandlungskopf kann alternativ oder zusätzlich zur Pflege des Gesichts ausgelegt sein, z. B. mit einer Creme.

Der Behandlungskopf ist zum Beispiel als Bürstenkopf ausgebildet. Gemäss dieser Ausführungsvariante ist das Gesichtspflege-Gerät eine Gesichtsbürste.

Das Pflegeteil bzw. der Pflegekopf kann insbesondere aufsteckbar sein.

Das Gesichtspflege-Gerät enthält eine Vorderseite, auch Oberseite genannt. Die Vorderseite entspricht jener Seite des Gesichtspflege-Geräts, zu welcher hin der Behandlungskopf bzw. dessen auf das Gesicht einwirkenden Teile gerichtet sind.

Das Gesichtspflege-Gerät enthält ferner eine Rückseite, auch Unterseite genannt. Die Rückseite ist die der Vorderseite bzw. dem Behandlungskopf entgegengesetzte Seite.

Das Gesichtspflege-Gerät enthält einen elektromotorischen Antrieb, welcher zur Erzeugung einer Dreh- und/oder Vibrationsbewegung im Pflegekopf mit dem Pflegekopf zusammenwirkt. Vibrationen können über ein mit dem elektromotorischen Antrieb zusammenwirkenden Exzenter-Element erzeugt und auf den Pflegekopf übertragen werden. Der elektromotorische Antrieb kann im Bereich des Pflegekopfes im Gehäuse angeordnet sein.

Im Griffkörper kann ein Schalter zum Ein- und Ausschalten des Gesichtspflege-Geräts vorgesehen sein.

Im Griffkörper kann eine Leiterplatte angeordnet sein. Auf der Leiterplatte kann ein NFC-Modul mit einer Sende- und Empfangseinheit angeordnet sein. Auf der Leiterplatte kann ferner eine LED-Anzeige für Statusanzeigen angeordnet sein.

Im Griffkörper können im Weiteren eine Sekundärzelle sowie eine Induktionsspule zum Aufladen der Sekundärzelle angeordnet sein. Die Sekundärzelle kann in Längsrichtung des Griffkörpers angeordnet sein. Die Induktionsspule kann in dem, dem Pflegekopf gegenüber liegenden Ende des Griffkörpers angeordnet sein.

Die Antenne kann im Griffkörper angeordnet sein. Die Antenne kann auf der Leiterplatte angeordnet sein. Die Antenne kann in Längsrichtung des Griffkörpers, insbesondere parallel zur Sekundärzelle, angeordnet sein. Die Antenne kann dabei seitlich zur Sekundärzelle angeordnet sein.

Weiter kann die Antenne zwischen dem Antrieb und der Sekundärzelle angeordnet sein. Die Antenne kann in diesem Fall quer zur Längsrichtung des Griffkörpers orientiert sein.

Die Leiterplatte, die Sekundärzelle, die Antenne und die Induktionsspule können über eine Trägerstruktur bzw. Trägerbauteil zu einer Montageeinheit verbunden sein.

Die Gehäusewand des Griffkörpers kann über eine Fügenaht in Längsrichtung in zwei Halbschalen teilbar sein, wodurch ein Zugang zum Inneren des Griffkörpers und zur Montageeinheit geschaffen werden kann.

Es ist auch möglich, dass der Griffkörper an seinem freien Ende über einen Verschlussdeckel verschliessbar ist.

Dem Gesichts-Pflegegerät wie auch dem Körper-Pflegegerät kann eine Ladestation zugeordnet sein, wie bereits an anderer Stelle in dieser Anmeldung ausführlich beschrieben.

Die in dieser Schrift genannten Sensoren können im Elektronikteil im Gehäuse des Griffkörpers, z. B. innen oder aussen am Gehäuse, oder am Pflegeteil, z. B. am Pflegekopf, wie Bürstenkopf, angebracht sein.

Die in dieser Schrift genannten Sensoren können neben Zahnbürsten und Geschichtspflegegeräten auch in anderen Handgeräten Einsatz finden sofern dies aufgrund des Einsatzzweckes des Handgerätes Sinn ergibt bzw. technisch ausführbar ist.

Misst zum Beispiel der Drucksensor einen hohen Anpressdruck des Pflegekopfes, so kann dies einerseits dem Benutzer unmittelbar mitgeteilt werden, damit dieser den Anpressdruck während der Benutzung reduziert. Die Mitteilung kann optisch (z.B. mittels LED), haptisch (z.B. Ändern der Motorenleistung, Aussetzen der Motorenleistung), über eine Anzeige oder akustisch erfolgen. Andererseits kann aufgrund eines gemessenen, dauerhaft zu hohem Anpressdruck zur Kompensation während der Benutzung die Anwendungsgeschwindigkeit des Pflegekopfes reduziert werden. Dies geschieht beispielsweise durch Reduktion der Motorengeschwindigkeit des elektromotorischen Antriebes.

Der Accelerometer dient z. B. der Ermittlung von Schlägen, welche auf das Handgerät einwirken, z. B. durch Fallen lassen. Diese Informationen können beispielsweise auch bei Garantieansprüchen relevant sein.

Zusätzlich kann damit die räumliche Position und/oder der Bewegungsablauf mit dem Handgerät erfasst werden. Dies wiederum gibt Aufschluss über das Verhalten bei der Nutzung des Handgerätes. So kann eine Putzbewegung erfasst, und darauf hin ausgewertet werden, ob diese beispielsweise schnell oder langsam, kreisend oder linear oder scheuernd ist. Es kann auch festgestellt werden, ob alle notwendigen Zonen (bei Gesichtspflege-Geräten z. B. die Gesichtszonen; bei Zahnbürsten z. B. die Gebissquadranten) gereinigt wurden.

Ein dadurch festgestelltes Fehlverhalten bzw. ein festgestelltes Optimierungspotential bei der Putzbewegung oder Abdeckung der Zonen kann mit der Einstellung von Parametern im Handgerät und/oder Mobilgerät kompensiert werden. So kann beispielsweise die Einstellung eines Timers bzw. eines Zonen-Timer, eine Auto-onoff-Funktion oder die Anwendungsgeschwindigkeit des Pflegeteils angepasst werden.

Ferner betrifft die Erfindung auch eine Funktionseinheit, enthaltend:
- ein Handgerät zur Körperpflege wie oben beschrieben, und
- ein elektronisches Mobilgerät, wobei das elektronische Mobilgerät eine aktive Sende- und Empfangseinheit zur bidirektionalen, drahtlosen Datenübertragung zwischen Handgerät und dem Mobilgerät enthält.

Die bidirektionale Datenübertragung kann in jede Richtung unterschiedlich ausgestaltet sein

Die Funktionseinheit entspricht quasi einem Körperpflegesystem mit einem Handgerät zur Körperpflege und einem Mobilgerät.

Das elektronische Mobilgerät zeichnet sich vorzugsweise dadurch aus, dass dieses sowohl bezüglich Datenübertragung als auch bezüglich Stromversorgung drahtlos betrieben werden kann.

Der Ladevorgang des Mobilgerätes kann jedoch durchaus mittels einer Kabelverbindung geschehen. Das Mobilgerät besitzt jedoch vorzugsweise auch eine Energiezelle für eine drahtlose Stromversorgung.

Ferner handelt es sich beim Mobilgerät vorzugsweise um ein handelsübliches Gerät. Dies heisst, dass die erfindungsgemässen Datenverarbeitungs- und Übermittlungsprozesse bzw. Kommunikationsprozesse im Zusammenhang mit dem Handgerät insbesondere eine Nebenfunktion des Mobilgerätes darstellen.

Das Mobilgerät zeichnet sich vorzugsweise durch mögliche Hauptfunktionen, wie Mobil-Telefonie (z. B. auf GSM-(Global System for Mobile Communications)-Basis), SMS-Dienste, MMS-Dienste, und/oder drahtloser Internet-Zugriff (z. B. über WLAN oder GSM) unter Einsatz eines Webbrowsers aus.

Ferner zeichnet sich das Mobilgerät vorzugsweise auch dadurch aus, dass dieses mit einem Betriebssystem betrieben wird, welches, z. B. neben einem Webbrowser, die Anwendung von Software-Applikationen zulässt. Die Software-Applikationen lassen sich beispielsweise über einen Webbrowser vom Internet oder über einen App-Store herunterladen. Der App-Store ist ein Geräte-spezifisches Internet-Verkaufsportal für Software-Applikationen.

Das Mobilgerät enthält beispielsweise ein Display zur Anzeige von Informationen, einen Prozessor sowie einen permanenten Datenspeicher.

Die aktive Sende- und Empfangseinheit des Mobilgeräts zum Senden und Empfangen von Daten zwischen Mobilgerät und Handgerät kann auch als Transceiver bezeichnet werden. Diese ist vorzugsweise zur aktiven Erzeugung von elektromagnetischen Wellen zwecks Datenübermittlung ausgelegt. Der Transceiver ist insbesondere für eine NFC-Kommunikation ausgelegt. Die Sende- und Empfangseinheit kann insbesondere ein NFC-Modul sein. Diese kann beispielsweise standardmässig im Mobilgerät installiert sein.

Das Mobilgerät kann z. B. ein Mobiltelefon, ein Smartphone, ein Tablet-Computer, ein PDA (Personal Digital Assistant) ein Notebook oder Netbook sein.

Das Mobilgerät kann auch über eine permanente nutzbare Netzstromversorgung verfügen.

Das Mobilgerät kann über mechanische Mittel zur Kommunikation mit dem Handgerät verfügen. Die mechanischen Mittel können einen Taster enthalten.

Die mechanischen Mittel können z. B. über eine Schnittstelle am Mobilgerät, wie Mikrofonanschluss oder USB-Schnittstelle, mit dem Mobilgerät verbindbar sein.

Diese mechanischen Mittel können mit dem Ein-/Ausschalter des Handgerätes koppelbar sein um Informationen an das Handgerät zu übermitteln.

Weiter kann das Mobilgerät auch eine so genannte Smartwatch sein. Die Smartwatch ist eine Armbanduhr mit erweiterter Funktionalität.

Die Smartwatch kann als unabhängiges Mobilgerät ausgebildet sein. Die Smartwatch kann in diesem Fall die gleichen Funktionen enthalten wie das weiter oben beschriebene Mobilgerät.

Ferner kann die Smartwatch auch ein von einem Mobilgerät, wie Smartphone, oder einem anderen elektronischen Gerät (Hauptgerät), abhängiges Zusatzgerät sein, welches seine volle Funktionalität erst zusammen mit dem zugehörigen elektronischen Hauptgerät ausüben kann.

Es kann grundsätzlich ein Zusatzgerät, wie eine Smartwatch, zwischen das Mobilgerät und das Handgerät geschaltet werden.

Die Funktionseinheit kann im Weiteren enthalten:
- ein Ladegerät zum kontaktlosen Aufladen des Handgeräts zur Körperpflege, wobei das Ladegerät ein Datenübertragungsmodul zur vorzugsweisen bidirektionalen, drahtlosen Datenübertragung zwischen dem Datenübertragungsmodul des Handgerätes und dem Datenübertragungsmodul des Ladegeräts enthält.

Die Funktionseinheit kann sich ferner dadurch auszeichnen, dass
- der Transceiver des elektronischen Mobilgeräts zur vorzugsweisen bidirektionalen, drahtlosen Datenübertragung zwischen dem Ladegeräts und dem Mobilgerät ausgelegt ist, und
- das Datenübertragungsmodul des Ladegeräts zur vorzugsweisen bidirektionalen, drahtlosen Datenübertragung zwischen dem Mobilgeräts und dem Ladegeräts ausgelegt ist.

Das Datenübertragungsmodul des Ladegeräts kann wie das im Zusammenhang mit dem Handgerät beschriebenen Datenübertragungsmodul aufgebaut sein und die gleichen Informationen übertragen wie das Mobilgerät an das Handgerät. Diesbezüglich wird auf die Beschreibung zum Datenübertragungsmodul weiter oben verwiesen.

Zur Datenübertragung kann das Ladegerät z.B. seine Induktionsspulen einsetzen. Diese können mit dem Handgerät und/oder mit dem Mobilgerät Informationen Austauschen.

Das Mobilgerät oder das Handgerät kann beispielsweise dazu ausgelegt sein, Steuerbefehle bzw. Ladeparameter zur Steuerung des Ladevorganges drahtlos an das Ladegerät zu übermitteln. So kann mit dem Mobilgerät beispielsweise eingestellt werden, dass bei Erreichen eines unteren Grenzwertes des Ladestatus' der Energiezelle bzw. Sekundärzelle das Ladegerät den Ladevorgang startet. Ferner kann das Mobilgerät beispielsweise eingestellt werden, dass bei Erreichen eines oberen Grenzwertes des Ladestatus' der Energiezelle das Mobilgerät den Ladevorgang beendet.

So kann zum Beispiel auch die sporadische Volladung der Energiezelle bzw. Sekundärzelle über das Mobilgerät programmiert werden.

So können beispielsweise dank einer entsprechenden Ausgestaltung der Hardware und/oder der Software in den einzelnen Geräten Ladeparameter direkt vom Mobilgerät auf das Ladegerät oder vom Mobilgerät via Handgerät zum Ladegerät übermittelt werden.

Die Ladedaten, beispielsweise wann, wie lange geladen wurde und auch der jeweilige technische Zustand der Energiezelle und der Ladestatus der Energiezelle können dank bi-direktionaler Kommunikation ebenfalls z. B. zur Analyse an das Mobilgerät übertragen werden. Die Auswertung dieser Daten kann aber dem Hersteller vorbehalten sein.

Das Ladegerät kann mit dem Mobilgerät auf gleiche Weise bidirektional kommunizieren wie das Mobilgerät mit dem Handgerät. Die bidirektionale Kommunikation kann ebenfalls mit unterschiedlichen Technologien je Richtung ausgestaltet sein.

Das Ladegerät kann auch zur unidirektionalen Kommunikation ausgelegt sein, bei welcher das Ladegerät lediglich (Steuerungs-) Daten empfängt. So kann das Ladegerät einen Empfänger mit Antenne, jedoch keinen Sender, enthalten.

Das Ladegerät kann auch zur uni- oder bidirektionalen Kommunikation mit dem Handgerät ausgelegt sein. In einer solchen Konstellation muss die Beziehung unter den Geräten der Funktionseinheit abgestimmt sein. Das heisst, dass in der einfachen Beziehung zwischen dem Handgerät und dem Mobilgerät das Mobilgerät der Energie-Lieferant ist und so eigentlich über das Handgerät bestimmt.

Im Fall, dass weiter auch das Ladegerät Teil der Funktionseinheit ist, muss diese angepasst werden.

Variante 1: Kommunikation zwischen dem Handgerät und Ladegerät möglich, heisst, dass das Ladegerät im vorherigen Sinne der Energie-Lieferant sein muss. Dies sofern im Handgerät dasselbe Datenübertragungsmodul für die Kommunikation zwischen dem Handgerät und dem Mobilgerät wie auch zwischen dem Handgerät und dem Ladegerät genutzt wird.

Variante 2: Kommunikation zwischen dem Handgerät und dem Ladegerät möglich, heisst, dass im Handgerät ein Datenübertragungsmodul integriert ist, welches selbst Energie-Lieferant sein kann. In diesem Fall kann das Datenübertragungsmodul im Ladegerät ein passives Element sein.

So lässt sich beispielsweise das Energiemanagement betreffend das Aufladen der Sekundärzelle durch das Ladegerät über das Handgerät steuern. Ferner können Statusanzeigen am Ladegerät über das Handgerät erfolgen. Statusanzeigen können über eine LED-Anzeige am Ladegerät erfolgen, welche den Funktionsstatus, wie z. B. Laden oder Stand-by oder Entladen, mittels unterschiedlicher Farben anzeigt. Ferner kann auch die Anzeige des Lade-Status mittels einer oder mehrerer LED's über das Handgerät erfolgen.

Die erfindungsgemässe Funktionseinheit weist den Vorteil auf, dass das Handgerät, welches in der Regel möglichst günstig in der Produktion sein soll, keine teuren Elektronikkomponenten enthält. So sind beispielsweise die Komponenten zur drahtlosen Kommunikation kostengünstige Standardprodukte aus Massenfertigung. Die vergleichsweise aufwändige Elektronik steht dahingegen meist standardmässig in den genannten Mobilgeräten zur Verfügung.

Die Auswertung und Darstellung von Daten findet vor allem auf dem Mobilgerät statt, welches die dazu notwendigen, teuren Elektronikkomponenten wie Display oder leistungsfähiger Prozessor sowie ein Betriebssystem zur Ausführung von Software-Applikationen oder einen grossen Datenspeicher mit kurzen Zugriffszeiten bereits enthält.

Einfache Auswertungen von Daten können auch im Geräteprozessor des Handgeräts vorgenommen werden. Dies kann z. B. das Berechnen von Durchschnittswerten oder von Maximal- und Minimalwerten sein.

Erfindungsgemäss lässt sich folglich ein bestehendes Mobilgerät, welches der Benutzer ohnehin bereits besitzt, zur Ausübung verschiedenster Funktionen in Verbindung mit einem Handgerät zur Körperpflege einsetzen. Das Handgerät braucht hierzu lediglich mit elektronischen Komponenten zur Kommunikation mit dem Mobilgerät ausgerüstet zu werden. Das Mobilgerät wiederum ist in der Regel bereits standardmässig mit vorgenannten elektronischen Komponenten zur drahtlosen Kommunikation mit dem Handgerät, insbesondere mit einer aktiven Sende- und Empfangseinheit, wie NFC-Modul bzw. mit NFC-Technologie, ausgerüstet. Ein diesbezügliches Nachrüsten des Mobilgerätes ist daher in der Regel nicht notwendig.

Das Mobilgerät kann auch mit zusätzlichen Mitteln zur Ausübung der Kommunikation ergänzt werden. Z.B. können diese Mittel über drahtlose Mittel verfügen, falls das Mobilgerät nicht standardmässig über solche Mittel verfügt. Mobilgerät und zusätzliche Mittel bilden dann wiederum eine Einheit.

Das erfindungsgemässe Handgerät zur Körperpflege erlaubt nun im Zusammenwirken mit einem Mobilgerät eine Vielzahl von Funktionalitäten. Dabei kann die Software-Applikation auf dem Mobilgerät für den Up- und Download von Daten auf das Handgerät sowie zur Analyse und Verarbeitung der Daten ausgelegt sein.

So können beispielsweise Besitzerinformationen, wie Name des Besitzers oder seine Kontaktdaten, wie Wohnadresse, e-Mail oder Mobilfunk-Nummer über das Mobilgerät erfasst und im Mobilgerät und/oder im Handgerät abgelegt und von diesem wieder abgerufen werden.

Ferner können Benutzerinformationen über das Mobilgerät erfasst und im Mobilgerät und/oder im Handgerät abgelegt werden. Die Benutzerinformation können beispielsweise den Namen des Benutzers, seine Kontaktdaten, wie Wohnadresse, e-Mail oder Mobilfunk-Nummer. Ferner können die Benutzerinformationen auch das Geschlecht, oder das Alter umfassen.

Zudem lassen sich weitere Daten, welche benutzerspezifisch sind, durch das Mobilgerät erfassen und auf diesem oder auf dem Handgerät abspeichern. Dies können beispielsweise medizinische Angaben sein. So können Daten über den Zustand des Zahnfleischs (z. B. empfindliches Zahnfleisch, Rückbildung des Zahnfleischs), über die Zähne (frei liegende Zahnhälse, Füllungen, Implantate, etc.) erfasst werden. Ferner können Angaben zu Lebensgewohnheiten, wie Essgewohnheiten, oder Angaben über verwendete Pflegemittel, wie Zahnpasta, Mundwasser, Hautcreme, Rasierschaum, etc. erfasst werden. Diese Erfassung kann beispielsweise über einen elektronischen Fragebogen erfolgen.

Ist das Handgerät ein Gesichtspflege-Gerät oder ein Körperpflege-Gerät, so können auf dem Mobilgerät auch Daten über die Hauteigenschaften bzw. den Hauttyp oder daraus abgeleitete Betriebsparameter auf das Handgerät abgespeichert werden. Die Daten über Hauteigenschaften können zum Beispiel über die Analyse einer, insbesondere vom Mobilgerät oder Drittgerät (z. B. externe Kamera) aufgenommene Photographie abgeleitet werden. Die Hauteigenschaften können sein der Hauttyp, der Aknebefall, die Pigmentierung der Haut, z. B. dunkle oder helle Haut, Sommersprossen, und/oder die Feuchtigkeit der Haut.

Ferner können beispielsweise auch Garantiedaten, wie Herstellort, Herstellzeit, Produktionslos, Rückverfolgbarkeit oder Prozessor-ID auf dem Mobilgerät und/oder dem Handgerät abgelegt und über das Mobilgerät abgerufen werden.

Im Weiteren lassen sich mit dem Handgerät auch Daten zur Ermittlung von Nutzungsgewohnheiten erfassen. Die Nutzungsgewohnheiten werden z. B. vom Mobilgerät aus den aufgezeichneten Daten mittels einer entsprechenden Software-Applikation abgeleitet. Die Nutzungsgewohnheiten können z. B. sein, wann das Handgerät benutzt wurde (Datum, Uhrzeit), die Dauer der Nutzung oder das gewählte Körperpflegeprogramm, z. B. die Anwendungsgeschwindigkeit des Körperpflegeelementes. Die Anzahl und Dauer der Nutzungen in einem bestimmten Zeitraum lassen sich im Weiteren für Auswertungen verwenden. Dazu gehört auch die Auswertung von Sensordaten, wie z.B. der Anpressdruck des Körperpflegeelements auf die zu behandelnde Körperoberfläche, die Zonenabdeckung, der Bewegungsablauf oder die Temperatur des Körperpflegeelementes.

Im Weiteren lassen sich mit dem Handgerät Daten, welche für die Wartung und den Unterhalt des Handgerätes relevant sind, erfassen. Aus diesen Daten lassen sich über das Mobilgerät mittels einer entsprechenden Software-Applikation Wartungsdaten, wie z. B. Wechsel des Pflegeteils oder Pflegekopfes, Wechsel der Energiezelle, Reinigungsintervalle oder Wartungsintervalle für das Handgerät ermitteln.

So kann beispielsweise auf Basis der Anzahl Nutzungen bzw. der Gesamtdauer der Nutzung, auf Basis der seit dem letzten Wechsel verstrichenen Zeit, und gegebenenfalls auf Basis von weiteren, verschleissrelevanten Einflussgrössen, wie Anpressdruck, der Zeitpunkt für den Wechsel des Körperpflegeelementes bzw. des Pflegeteils, wie z.B. des Bürstcnkopfs oder der Rasierklinge, ermittelt und angezeigt werden.

Die Nutzungsdauer des Pflegeteils kann jedoch auch vom Benutzer selbst festgelegt werden. So kann der Benutzer die gewünschte Nutzungsdauer über die Software-Applikation eingeben. Bei Ablauf der vorgegebenen Nutzungsdauer wird der Benutzer über die Software-Applikation an den Wechsel erinnert.

Das Pflegeteil selber kann auch über Kommunikationsmittel verfügen, wie NFC-Tag, RFID-Tag. Des Weiteren kann das Körperpflegeteil bzw. das Körperpflegeelement einen opto-elektronisch lesbaren Code, wie Strichcode, Barcode oder QR-Code enthalten.

Der opto-elektronisch lesbare Code enthält Daten zum Körperpflegeteil bzw. Körperpflegeelement. Diese Daten können sein: technische Angaben zum Körperpflegeteil bzw. Körperpflegeelement, geeignete Körperpflegeprogramme oder Körperpflegeparameter zum Körperpflegeteil bzw. Körperpflegeelement. Die Daten können auch lediglich Informationen zur Identifikation des Körperpflegeteils bzw. Körperpflegeelementes sein. Mittels dieser Information kann dann das Mobilgerät aus einer internen oder externen Datenbank, zum Beispiels über eine Mobilfunkverbindung, die z. B. eine Internetverbindung herstellt, weitere Daten wie technische Spezifikationen oder geeignete Körperpflegeprogramm bzw. Körperpflegeparameter zum identifizierten Körperpflegeteil bzw. Körperpflegeelement abrufen.

Ferner kann das Mobilgerät über den opto-elektronisch lesbaren Code den ersten Gebrauch das Körperpflegeteil erfassen (Mittels NFC oder Kamera) und beim Überschreiten der Lebensdauer des Pflegteils dem Nutzer den Wechsel anzeigen. Dies kann nützlich sein, wenn das gleiche Handgerät von mehreren Nutzern eingesetzt wird oder wenn ein Nutzer mehrere Körperpflegeteile einsetzt.

Ferner kann eine sogenannte "Reset-Funktion" vorgesehen sein, welche dem Benutzer erlaubt, die Nutzungsdauer auf einen Anfangswert zurückzusetzen, so dass die Nutzungsdauer von neuem berechnet wird.

Die Anzeige erfolgt vorzugsweise in der Software-Applikation, dennoch ist eine Anzeige auf dem Handgerät nicht ausgeschlossen. Die entsprechende Information kann vom Mobilgerät an das Handgerät zwecks Anzeige vorgängig übertragen werden. Es ist möglich Anzeigen auf dem Handgerät und Mobilgerät bezüglich bestimmten Funktionen, Parametern oder Schwellwerten auf beiden Geräten mit unterschiedlichen Mitteln anzuzeigen.

Ferner können über die Software-Applikation Zusatzinformationen für den Benutzer, wie z. B. das Wetter am Standort des Mobilgeräts, die aktuellen Börsenkurse oder aktuelle News angezeigt werden.

Das erfindungsgemässe Handgerät oder das Mobilgerät kann auch Mittel, insbesondere Sensormittel, zur Bestimmung der geographischen Position enthalten. Dies kann z. B. ein GPS-Empfänger sein. Diese Mittel erlauben, die Erfassung der aktuellen Position sowie gegebenenfalls die Ermittlung des zurückgelegten Weges des Handgerätes. Mittels den daraus gewonnenen Informationen lassen sich zum Beispiel auch Geräteeinstellungen vornehmen, welche für die geographische Region, bzw. Benutzergruppe dieser Region, in welcher das Handgerät benutz wird, spezifisch sind.

So kann beispielsweise bei einem Gesichtspflege-Gerät oder Körperpflege-Gerät der Hauttyp aufgrund der geographischen Region (Afrika, Europa, Asien) evaluiert und gegebenenfalls eingestellt werden.

Bevorzugt wird die geographische Position über das Mobilgerät ermittelt mit dem das Handgerät gekoppelt wird. Mobilgeräte verfügen in der Regel standardmässig entsprechende Mittel, über welche die geographische Position ermittelt werden kann.

Über das Mobilgerät können im Weiteren unterschiedliche Körperpflegeprogramme, z. B. Reinigungsprogramme erfasst oder erstellt werden. Ferner können bestehende Körperpflegeprogramme über das Mobilgerät auch geändert werden.

So können z. B. gewisse Parameter in vorgegebenen Bereichen oder aus einer Wertevorgabe ausgewählt werden, um das Handgerät persönlich zu konfigurieren. Weiter ist es auch möglich, gewisse Standardprogramme zu laden. Ferner ist es auch möglich das Handgerät über das Mobilgerät auf Standard-Einstellungen zurückzusetzen.

Es kann ferner vorgesehen sein, dass für verschiedene Körperzonen unterschiedliche Körperpflegeprogramme bzw. unterschiedliche Körperpflegeparameter abgerufen werden. Diese Funktion kann an einen Zonen-Timer gekoppelt sein.

Bei einem Gesichtspflege-Gerät können zum Beispiel für das Gesicht: Wangen, Kinn oder Stirn unterschiedliche Körperpflegeprogramme bzw. unterschiedliche Körperpflegeparameter angewendet werden. Solche Pflegeparameter können zum Beispiel die Stärke von Vibrationen des Pflegekopfes oder auch die Dauer der Behandlung sein.

Bei einem Körperpflege-Gerät können zum Beispiel für Rücken, Füsse, Hände oder Gesäss unterschiedliche Körperpflegeprogramme bzw. unterschiedliche Körperpflegeparameter angewendet werden.

Der Wechsel des Körperpflegeprogrammes bzw. der Körperpflegeparameter sind insbesondere an den Zonenwechsel gekoppelt. Die Anzeige eines solchen Wechsels kann über ein mechanisches (z.B. stärkere Vibration oder keine Vibration), akustisches oder optisches Signal erfolgen.

Der Ablauf der verschiedenen Körperzonen beziehungsweise die Reihenfolge der Behandlung kann individuell eingestellt werden oder aus einem Standardvorschlag entnommen werden.

Es kann auch vorgesehen sein, dass die Wechsel des Körperpflegeprogrammes bzw. der Körperpflegeparameter für verschiedene Pflegzonen manuell vorgenommen werden kann.

Körperpflegeprogramme enthalten beispielsweise steuerungsrelevante Daten zur Ausführung einer Körperpflegefunktion. Die Körperpflegeprogramme können beispielsweise Steuerungsinformationen bezüglich einer Anwendungsgeschwindigkeit des Körperpflegeelementes, eines Grenzwertes für den Anpressdruck oder eines Bewegungsmusters des Körperpflegeelementes, insbesondere eines Bürstenkopfes, enthalten.

Ferner kann das Körperpflegeprogramm auch Steuerungsinformationen bezüglich der Pflegedauer, insbesondere der Reinigungsdauer, enthalten.

Im Weiteren können die Körperpflegeprogramme auch aufgrund von Benutzerinformationen erstellt oder geändert bzw. angepasst werden. So können beispielsweise bei empfindlichen Zahnhälsen der Grenzwert für den maximalen Anpressdruck des Bürstenkopfs, das Bewegungsmuster oder die Reinigungsgeschwindigkeit im Reinigungsprogramm entsprechend angepasst werden.

Der Anpressdruck kann als Parameter definiert werden. So kann ein Wert definiert werden, welcher als Maximum-Wert für den Anpressdruck des Geräts gegen seine Behandlungsoberfläche gilt und bei dessen Überschreitung eine Benachrichtigung, z. B. visuell oder akustisch, auf dem Handgerät erfolgt. Standard-Werte können vom Hersteller vorgegeben werden. Diese basieren auf seinen z. B. aus Tests oder Erfahrung gewonnenen Erkenntnissen. Es ist auch denkbar, dass der Benutzer selbst über das Mobilgerät persönliche Parameter festlegen kann. Der Parameter-Bereich bewegt sich z. B. zwischen 100 Gramm bis 1000 Gramm. Auch der vom Hersteller festgelegte Standard liegt beispielsweise in diesem Bereich.

Bei einer Munddusche kann beispielsweise über das Mobilgerät der Wasserdruck, die Wassertemperatur und/oder die Beimischung von Zusatzsubstanzen programmiert bzw. gesteuert werden. Über das Mobilgerät lassen sich insbesondere entsprechende Pflegeprogramme ändern oder erstellen, welche Werte für den Wasserdruck, die Wassertemperatur und/oder von Zusatzsubstanzen umfassen.

Ferner können auch Betriebsparameter zur Desinfizierung des Handgeräts bzw. des Pflegeteils in einer Desinfiziereinheit über das Mobilgerät übermittelt werden. Die Parameter können z. B. die Dauer und/oder Intensität einer UV-Bestrahlung sein.

Die Anwendungsgeschwindigkeit des Körperpflegeelementes lässt sich auf unterschiedliche Weise steuern. Sie kann beispielsweise über die Motorengeschwindigkeit, d.h. die Drehzahl der Motorwelle gesteuert werden. Ferner kann die Anwendungsgeschwindigkeit auch über die Steuerung von Getriebestufen und/oder Übersetzungen gesteuert werden.

Wird die Anwendungsgeschwindigkeit über die Motorengeschwindigkeit gesteuert, so kann die Motorengeschwindigkeit auf verschiedenen Wegen abgeleitet werden. Sie kann z. B. direkt über die Drehzahl des Motors abgeleitet werden. Die Motorengeschwindigkeit kann aber auch indirekt über die Anwendungsgeschwindigkeit des Körperpflegeelementes, z. B. über die Drehzahl am Pflegekopf, abgeleitet werden. So kann bei der direkten Methode dem Mobilgerät die effektive Motorengeschwindigkeit angegeben werden. Ferner kann auch auf einer Skala von 0% bis 100% angegeben werden, wieviel die Motorengeschwindigkeit in Prozenten sein soll. Dabei entspricht 100% dem maximalen Wert der Motorengeschwindigkeit.

Bei der indirekten Methode wird die Bewegung des Pflegekopfs parametrisiert und auf die Motorengeschwindigkeit zurückgerechnet. So kann dem Mobilgerät die effektive Anwendungsgeschwindigkeit des Körperpflegeelementes, z. B. die Drehzahl am Bürstenkopf, angegeben werden, woraus das Mobilgerät die entsprechende Motorengeschwindigkeit errechnet. Ferner kann auch auf einer Skala von 0% bis 100% angegeben werden, wieviel die Anwendungsgeschwindigkeit in Prozenten sein soll. Dabei entspricht 100% dem maximalen Wert der Anwendungsgeschwindigkeit. Aus der Anwendungsgeschwindigkeit wird dann die Motorengeschwindigkeit abgeleitet.

Grundsätzlich ist es bei beiden Methoden möglich, dass der Hersteller Standardwerte vorgibt oder der Benutzer persönliche Werte erfassen kann. Weiter ist es möglich, aufgrund vorgegebener Körperpflegeprogramme die Motorengeschwindigkeit anzupassen. So kann beispielsweise bei einem Soft/Sensitiv-Programm, die Motorengeschwindigkeit eher in einem tieferen Bereich liegen.

Ist das Handgerät eine elektrische Zahnbürste, kann das Reinigungsprogramm ferner auf die einzelnen Gebiss-Zonen beispielsweise auf die Gebiss-Quadranten abgestimmt sein.

Ein Zonen-Timer, d.h. Zeitgeber, steuert zum Beispiel die Reinigungsdauer pro Zone, z. B. Quadrant, sowie die Pausen beim Wechsel zwischen zwei Zonen, z. B. Quadranten. Die Steuerungsdaten für den Zonen-Timer d.h. Zeitgeber sind z. B. im Reinigungsprogramm enthalten. Dabei ist es auch möglich, die Zonen-Reihenfolge zu definieren. Ferner ist es auch möglich jeweils ein auf die einzelne Zone angepasstes Reinigungsprogramm zu verwenden.

Bei Handgeräten, welches Zahnbürsten sind, werden beispielsweise zwischen 1 und 14 Zonen vorzugsweise zwischen 1 und 8 Zonen respektive Zeitabschnitte definiert. Die Gesamt-Zeit, die für die Reinigung aller Zonen (Summe der einzelnen Zonen-Zeiten) definiert wird, beträgt zwischen 1.5 Minuten und 3.5 Minuten, vorzugsweise zwischen 2 Minuten und 3 Minuten. Die Zeit, welche für die einzelne Zone zur Verfügung steht, beträgt vorzugsweise zwischen 10 Sekunden und 180 Sekunden. Die genannten Zahlen sind vorzugsweise vordefinierte Wertebereiche.

Bei Handgeräten, welches Gesichtspflege-Geräte sind, kann ebenfalls ein Zonen-Timer realisiert werden. Dabei sind die Zonen z. B. als erste Wange, zweite Wange und Stirn (3 Zonen) definiert. Eine abweichende Zonen-Definition ist ebenfalls möglich. Analog zur Zahnbürste können die Dauer der Anwendung pro Zone individuell festgelegt werden. Ferner kann jeder Zone oder einzelnen Zonen ein individuelles Massageprogramm zugeordnet sein. Neben den Gesichts Zonen können auch weitere Zonen am Köper definiert werden.

Bei Handgeräten, welches Gesichtspflege-Geräte sind, werden z. B. zwischen 1 und 8 Zonen, vorzugsweise zwischen 1 und 5 Zonen respektive Zeitabschnitte definiert. Die Gesamt-Zeit, die für die Behandlung aller Zonen (Summe der einzelnen Zonen-Zeiten) definiert wird, beträgt zwischen 0.5 Minuten und 3 Minuten, vorzugsweise zwischen 1 Minuten und 2 Minuten. Die Zeit, welche für die einzelne Zone zur Verfügung steht, beträgt vorzugsweise zwischen 10 Sekunden und 180 Sekunden. Die genannten Zahlen sind vorzugsweise vordefinierte Wertebereiche.

Auf dem Mobilgerät kann ebenfalls ein Zonen-Timer, welcher nicht direkt auf die Quadranten bei der Zahnreinigung bzw. die drei Zonen bei der Gesichtspflege abgestimmt ist, in die Software-Applikation integriert sein.

Mittels Unterbrüchen im Körperpflegevorgang (Motoren Stopps oder Änderung der Motorengeschwindigkeit) kann z. B. angezeigt werden, wann die nächste Behandlungsposition, insbesondere Reinigungsposition bzw. der nächste zu behandelnde bzw. reinigende Bereich oder die nächste zu behandelnde bzw. reinigende Zone in Angriff genommen werden kann. Der Nutzer kann beispielsweise angeben wie lange der Timer insgesamt laufen soll, wie viele Unterbrechungen er haben soll, d.h. wie viele Zonen er separat signalisiert haben möchte, und wie lange die jeweilige Unterbrechung sein soll.

Es kann auch zu einem geschickten Zusammenspiel zwischen Mobilgerät und Handgerät kommen. Weil auf dem Mobilgerät die Gebisszone bzw. Körperzone angezeigt wird, kann der Nutzer das Handgerät an die vorbestimmte Zone bewegen. Das Handgerät kann dann die Geräteparameter (z.B. die Geschwindigkeit) bei Erreichen der vorbestimmten Zone automatisch anpassen. Das Erreichen der Zone kann ohne weitere Kommunikation festgelegt werden oder über eine Kommunikation der Position des Handgeräts vom Handgerät an das Mobilgerät.

Der Zonen-Timer lässt sich auf allen Handgeräten zur Körperpflege realisieren, beispielsweise mit den genannten Funktionen.

Weiter lässt sich mit dem Zonen-Timer auch eine Gesamtlaufzeit anzeigen. Wenn beispielsweise keine Zonen speziell definiert sind, kann mit der Definition einer Zone und einer Laufzeit eine Gesamtlaufzeit definiert werden, nach welcher ein Signal anzeigt, dass die Zeit abgelaufen ist. Die Zeiten für die Gesamtlaufzeit sind der Definition der jeweiligen Zonen-Timer zu entnehmen.

Zusätzlich kann bei allen Handgeräten zur Körperpflege, wie beispielsweise elektrischen Zahnbürsten oder Gesichtspflege-Geräten, eine auf den Benutzer eingestellte Abschaltfunktion (Auto-off-Funktion) des Gerätes vorgesehen sein. Dabei wird das Handgerät nach einer vordefinierten Laufzeit abgeschaltet. Damit soll vermieden werden, dass aufgrund einer zu langen Anwendung nachteilige Effekte auftreten. Beispielsweise können bei Zahnbürsten bei zu langer Reinigung die Zähne oder das Zahnfleisch beeinträchtigt werden. Bei Gesichtspflege-Geräten kann eine zu lange Anwendung Hautirritationen hervorrufen.

Die Abschaltfunktion kann beispielsweise vom Mobilgerät basierend auf einer Haut-, Zahn- oder Zahnfleischanalyse festgelegt bzw. modifiziert werden. Diese Modifikation kann ebenfalls für einzelne Pflegezonen erfolgen.

Ergibt die automatische Hautanalyse beispielsweise, dass eine Hautirritation oder Aknebefall vorliegt, so wird Abschaltfunktion derart modifiziert, dass das Gerät früher ausschaltet, um die irritierte Haut zu schonen.

Weiter bringt eine Auto-off-Funktion Vorteile beim Transport der Handgeräte. So wird das Handgerät bei einem versehentlichen Starten durch diese Funktion nach einer bestimmten Zeit automatisch wieder gestoppt. Dadurch wird die Energiezelle nicht unnötig entleert.

Bei Zahnbürsten wird das Handgerät z. B. nach 3 Minuten bis 5 Minuten durch die Auto-off-Funktion abgestellt. Bei Gesichtspflege-Geräten beträgt die entsprechende Zeit z. B. 0.5 Minuten bis 3 Minuten.

Die Auto-off-Funktion kann mit dem Timer gekoppelt oder unabhängig von diesem sein. Gekoppelt heisst, dass die Auto-off-Funktion nach Ablauf des Timers bzw. Zonen-Timers aktiviert wird und das Gerät abstellt, es kann aber auch möglich sein, die beiden Zeit-Schaltungen unabhängig zu gestalten. Das heisst, die Zeiten des Timer bzw. Zonen-Timers können unabhängig von der Auto-off-Funktion eingestellt werden. Konkret heisst dies, dass die Zahnbürste je nach Festlegung der Zeiten der Zonen-Timer nach Ablauf der verschiedenen Zonen-Timer weiter laufen kann bis die Auto-off-Funktion das Handgerät abschaltet.

Das Reinigungsprogramm kann auch als Aneinanderreihung von verschiedenen Reinigungsmodi zusammengestellt werden. Der Nutzer kann beispielsweise verschiedene Elemente zu einem Reinigungsprogramm zusammensetzen. Für jedes Element wählt er beispielsweise die Art der Bewegung, die Geschwindigkeit bzw. Intensität der Bewegung (Minimal und Maximal Werte der Bewegung) und die Dauer. Dadurch kann der Benutzer ein vollständiges Reinigungsprogramm erzeugen, das individuell an ihn angepasst ist.

Reinigungsmodi im genannten Sinn sind im Wesentlichen jeweils ein Zustand bzw. eine Abfolge von Zuständen des elektrischen Funktionselements. Für vibrierende Zahnbürsten bzw. Gesichtsreinigungsgeräten können beispielsweise insbesondere folgende Modi zur Anwendung kommen:
- Regelmässige Bewegung (Single Speed) - Vibration ist immer gleich stark:
   a) Sensitiv (Langsame Geschwindigkeit);
   b) Normal (mittlere Geschwindigkeit);
   c) Schnell (aktiv);
- Multispeed;
- Wellenbewegung - Vibrationsstärke bewegt sich sinusförmig in einem vorgegebenen Bereich;
- Anschwellende Bewegung - Vibrationsstärke steigt in einem vorgegebenen Bereich an;
- Stop-and-Go-Bewegung - die Vibration wird immer wieder durch Ruhephasen unterbrochen.

Es ist möglich, dass beispielsweise über Tastenfunktionen am Handgerät definiert werden kann, welches Reinigungsprogramm oder welcher Reinigungsmodus gefahren wird. So ist es möglich das ganze Reinigungsprogramm zu wechseln oder auch in einem Reinigungsprogramm gewisse Reinigungsmodi zu aktivieren oder deaktivieren. Weiter kann über Tastenfunktionen auch der Wechsel von einem Reinigungsprogramm mit wechselnder Bewegung auf eine Standardeinstellung gesteuert werden. Die Standardeinstellung kann beispielsweise ein Single-Speed Reinigungsprogramm, d.h. ein Reinigungsprogramm mit einer regelmässigen Bewegung sein oder auch ein Multispeed-Programm das aus verschiedenen Reinigungsmodi gewählt ist.

Enthält das Handgerät Leuchtmittel, wie z. B. LED-Module, so lässt sich über das Mobilgerät der Einsatz der Leuchtmittel programmieren. So können die Leuchtmittel beispielsweise zur Anzeige des Ladestatus der Energiezelle programmiert werden. Auf diese Weise lässt sich z. B. über das Mobilgerät eine benutzerdefinierte Anzeige für den Ladestatus der Energiezelle einstellen.

So kann z. B. eine LED rot blinken sobald ein gewisser Energie-Level der Energiezelle unterschritten ist. Der Energie-Level kann vom Benutzer festgelegt werden.

Weiter ist es auch möglich einzustellen, dass das Leuchtmittel bei zu starkem Anpressdruck, d.h. bei Erreichen oder Überschreiten eines Grenzwerts des Anpressdrucks, in einer anderen Farbe leuchtet, als wenn der Anpressdruck unterhalb des Grenzwertes liegt.

Auch in diesem Fall kann das Mobilgerät und/oder das Handgerät als Anzeige des Anpressdruckes dienen.

Das Leuchtmittel am Handgerät kann grundsätzlich für die Anzeige eines Betriebszustandes genutzt werden. Ferner kann das Leuchtmittel auch Teil eines Anwendungsvorganges sein und z. B. als Timer oder Zonen-Timer dienen.

Es lassen sich verschiedene Parameter des Leuchtmittels einzeln oder in Kombination miteinander zu Anzeigezwecken einsetzen. Diese Parameter können sein: Helligkeit, Farbe, Blinken, Blinkfrequenz oder die Länge des Blinkens, d.h. wie lange geblinkt wird. Weiter kann auch die Dauer des einzelnen Blink-Impulses variiert werden.

Die Helligkeit kann beispielsweise als Prozentwert aus einem Prozentbereich von 0 bis 100% eingestellt werden. 0% entspricht dabei kein Licht (quasi ausgeschaltet) und 100% entspricht maximaler Helligkeit.

Die einstellbaren Farben hängen von den verwendeten Leuchtmitteln ab. So kann es sein, dass beispielsweise lediglich einzelne spezifische Farben angezeigt werden können, wie z. B. rot oder grün. Es ist auch möglich dass die anzuzeigende Farbe aus mehreren Farben gemischt wird und auf diese Weise eine Vielzahl von Farben aus dem Farbspektrum erzeugt werden können.

Die Leuchtmittel können auch als elektrisches Funktionsorgan dienen. So können die Leuchtmittel UV-Licht zur Desinfektion oder LED-Licht für eine Lichttherapie erzeugen.

Enthält das Handgerät eine Einrichtung zur Zufuhr eines Fluids, beispielsweise von Zahnpasta, aus einem Reservoir zum Körperpflegeelement, beispielsweise auf den Bürstenkopf, so kann über das Mobilgerät auch die Menge an zugeführtem Fluid bestimmt werden. Ferner kann die über eine bestimmte Zeitdauer verbrauchte Gesamtmenge erfasst werden. Diese Daten können auch dazu dienen, den Füllstand des Reservoirs mit Fluid zu überwachen. Entsprechend kann bei Unterschreiten eines bestimmten Füllstandes eine entsprechende Mitteilung bzw. Anzeige zum Wechsel des Reservoirs am Handgerät und/oder Mobilgerät erzeugt werden.

Enthält das Handgerät mehrere Funktionstasten/Funktionsschalter so kann über das Mobilgerät beispielsweise auch die Tastenbelegung definiert werden. Es kann somit am Mobilgerät gewählt werden welche Schalter am Handgerät das Gerät Ein/Ausschalten bzw. welcher Schalter zur Programmwahl dient.

Enthält das Handgerät Lautsprecher, so lässt sich über das Mobilgerät auch die Ausgabe akustischer Signale oder Sequenzen steuern.

Das Handgerät kann auch ein eigenes Display enthalten. Der Anzeigemodus am Display kann beispielsweise auch über das Mobilgerät festgelegt werden.

Ferner können auch Parameter zur Steuerung des Ladevorganges der Energiezelle, insbesondere Sekundärzelle, im Handgerät über das Mobilgerät eingegeben bzw. im Mobilgerät erzeugt und im Handgerät umgesetzt werden. Solche Parameter können beispielsweise festlegen, ab welchem Ladestatus die Energiezelle geladen werden soll, und ob die Energiezelle vollständig geladen werden soll.

Ferner können über das Mobilgerät Schwellenwerte für Messwerte von Sensoren festgelegt und auf das Handgerät übertragen werden. Diese Schwellenwerte lösen bei Erreichen oder Über- bzw. Unterschreiten während des Betriebs des Handgerätes eine Aktion aus. Diese Aktion kann sein: eine Anzeige bzw. Benachrichtigung des Benutzers oder eine Veränderung der Körperpflegefunktion, wie Ausschalten, Reduktion der Motorengeschwindigkeit des elektromotorischen Antriebes, Änderung des Pflegeprogramms oder wechseln auf ein anderes Pflegeprogramm.

Die Schwellwerte können z. B. durch die Benutzer individuell eingestellt werden, damit die entsprechende Aktion zu einem vom Benutzer gewünschten Zeitpunkt eintritt.

Das Handgerät kann dazu ausgelegt sein, in unterschiedliche Richtungen mit unterschiedlichen Kommunikationsmitteln, insbesondere mit einem Mobilgerät, zu kommunizieren.

Das Handgerät und das Mobilgerät können dazu ausgelegt sein, in unterschiedliche Richtungen mit unterschiedlichen Kommunikationsmitteln miteinander zu kommunizieren.

Neben der Vornahme von Einstellungen und Übergabe von Betriebsparametern und Steuerungsdaten an das Handgerät können auch umgekehrt Daten vom Handgerät auf das Mobilgerät übertragen werden. Die Daten können insbesondere Betriebsdaten oder Identifikationsdaten sein. Diese Daten können z. B. für statistische Auswertungen benutzt werden. Die statistischen Auswertungen können wiederum zur Festlegung bzw. zur Anpassung von Betriebsparametern bzw. Steuerungsdaten von Bedeutung sein, um beispielsweise die Körperpflegefunktion zu optimieren. Dabei wird eine Körperpflegefunktion ausgehend von effektiv gemessenen Daten angepasst.

Das Handgerät kann dazu ausgelegt sein, Daten mittels Betätigung einer Taste bzw. eines mechanischen Schalters, wie Ein-/Ausschalter, am Handgerät auf das Mobilgerät zu übertragen.

Die Betriebsdaten können beispielsweise das Datum und die Uhrzeit der Benutzung, die Dauer der Benutzung oder das verwendete Reinigungsprogramm umfassen. Ferner können die Betriebsdaten auch Messwerte von Sensoren umfassen. Solche Messwerte können z. B. Druckwerte von einem Drucksensor zur Messung des Anpressdruckes des Körperpflegeelementes oder Bewegungswerte (Lage, Geschwindigkeit, Beschleunigung, Position) von einem Bewegungssensor sein.

Betriebsdaten können auch Parameter der Funktionseinheiten umfassen, beispielsweise Motorengeschwindigkeit bzw. die Drehzahl der Motorwelle oder die Temperatur eines Heiz- oder Kühlelementes.

Im Weiteren können Daten über den Zustand des Handgeräts übermittelt werden. Solche Daten können zum Beispiel den Ladestatus oder den technischen Zustand der Energiezelle betreffen. Der Ladestatus ist zur Steuerung der Aufladung der Energiezelle notwendig oder zur Berechnung einer Restlaufzeit der Energiezelle auf Basis des aktuellen Ladestatus. Der technische Zustand der Energiezelle wiederum ist wichtig zur Beurteilung, ob eine Energiezelle ersetzt werden muss.

In diesem Zusammenhang kann auch der Energieverbrauch überwacht werden. Entsprechend kann vorgesehen sein, dass bei Erreichen eines definierten Energieverbrauchs eine Warnmitteilung oder Warnanzeige auf dem Mobilgerät und/oder dem Handgerät erzeugt wird.

Ferner können z. B. auch Lagesensordaten bzw. Beschleunigungssensordaten zu den Anwendungszonen, z.B. bei einer Zahnbürste zu den Gebiss-Quadranten, z.B. mit den jeweiligen Verweilzeiten erfasst werden. Daraus lässt sich zum Beispiel ableiten, in welcher Zone wie lange gereinigt wurde. Ferner lassen sich mittels Analyse von Lagesensordaten auch die Führung des Handgeräts zur Ausübung einer Körperpflegefunktion optimieren.

Lagesensordaten können auch dazu dienen, die Nutzung des Handgerätes durch Kinder von den Eltern zu überwachen. So lässt sich über Lagesensordaten beispielsweise ableiten, ob das Handgerät im Betrieb auch tatsächlich bewegt und die Körperpflegefunktion auch wirklich angewendet wurde. Diese Informationen können in der Software-Applikation entsprechend ausgewertet werden.

Handelt es sich beim Handgerät zur Körperpflege um eine Munddusche oder ein Körperpfleggerät mit Pflegeflüssigkeit, wie Creme oder Paste, so lassen sich über das Mobilgerät beispielsweise Parameter bzw. Steuerungsdaten wie (Wasser)-Strahldruck, Puls-Muster für den (Wasser)-Strahl, oder die Menge einer beizumischenden Substanz eingeben. Die Substanz kann z. B ein Mundwasser oder eine Reinigungsflüssigkeit sein. Ferner kann über die Erfassung der Betriebsdauer auch der Zeitpunkt für eine Entkalkung des Gerätes oder Teile davon ermittelt werden.

Handelt es sich beim Handgerät zur Körperpflege um ein Gesichtspflege-Gerät oder Körperpflege-Gerät, so lassen sich über das Mobilgerät beispielsweise Parameter bzw. Steuerungsdaten wie Drehwinkel oder Vibrationsstärke des Massageelementes, wie Bürste, sowie die Laufzeit bis zum Stop der Körperpflegefunktion, z. B. gemäss der oben beschriebene Auto-off-Funktion einstellen.

Der Mascara-Applikator kann zum Beispiel einen elektromotorischen Antrieb enthalten, mittels welchem der Applikator-Kopf in Schwingung, Vibration, Oszillation und/oder in Drehung versetzt werden kann. Zusätzlich oder alternativ dazu kann der Mascara-Applikator eine elektrische Heizung zum Beheizen des Applikator-Kopfes enthalten. Ferner kann der Mascara-Applikator ein Leuchtmittel zur Beleuchtung des Applikator-Kopfes enthalten.

So lassen sich über das Mobilgerät beispielsweise Parameter bzw. Steuerungsdaten wie Heizleistung, Kühlleistung, Lichtstärke, Vibrationsstärke oder Drehgeschwindigkeit am Applikator-Kopf erfassen.

Der elektrische Nassrasierer kann zum Beispiel einen elektromotorischen Antrieb enthalten, mittels welchem der Klingenkopf in Schwingung, Vibration, Oszillation und/oder in Drehung versetzt werden kann. Bei dieser Anwendung lässt sich die Anzahl der Benutzungen erfassen, um so den Zeitpunkt für den Wechsel des Klingenkopfs zu berechnen.

Auf dem Mobilgerät kann eine Software-Applikation implementiert sein, welche eine oder mehrere der folgenden Funktionalitäten aufweist, welche zum Teil bereits weiter oben erwähnt wurden:
- Erfassen von Daten, wie Benutzerdaten, Benutzerinformationen oder Benutzerprofilen, welche vom Benutzer über das Mobilgerät eingegeben werden;
- Erstellen oder Modifikation von Körperpflegeprogrammen aufgrund von erfassten oder gespeicherten Daten;
- Berechnen von Steuerungsdaten oder Betriebsparameter für elektrische Funktionsorgane des Handgeräts aufgrund von erfassten oder gespeicherten Daten;
- Berechnen von Steuerungswerten, Schwellenwerten oder Betriebsparameter
- Erstellen eines Körperpflegeprogramms für das Handgerät:
   - auf Basis von ermittelten Betriebs- und/oder Sensordaten:
   - auf Basis von benutzerdefinierten Daten:
   - auf Basis der verwendeten Körperpflegeelemente;
   - auf Basis von mit dem Handgerät verwendeten Körperpflegemitteln;
- Abrufen von Körperpflegeprogrammen;
- Sicherstellung einer drahtlosen Kommunikation zwischen Mobilgerät und Handgerät;
- Betreiben einer an das Mobilgerät angeschlossene, mechanischen Einheit, mit z. B. einem Taster, zur mechanischen Übertragung von Daten;
- Übermitteln von Daten vom Mobilgerät an das Handgerät;
- Empfangen von Daten vom Handgerät;
- Übermitteln von Daten vom Mobilgerät an ein Ladegerät;
- Empfangen von Daten vom Ladegerät;
- Berechnen von Steuerungswerten oder Betriebsparameter für das Ladegerät;
- Auswerten von Betriebsdaten, insbesondere Erstellen von statistischen Auswertungen;
- Auswerten von Sensordaten, insbesondere Erstellen von statistischen Auswertungen;
- Erstellen von Darstellungen von statistischen Auswertungen aus Betriebs- und/oder Sensordaten;
- Analyse von Sensor- und Betriebsdaten und daraus Generierung eines Feedbacks für den Benutzer, gegebenenfalls mit Vorschlägen zur Änderung des Pflegeverhaltens;
- Datenspeicherung und Datenverwaltung auf dem Mobilgerät;
- Erstellen von Datensicherungen (Backup);
- Herunterladen von Körperpflegeprogrammen bzw. von Betriebsparameter / Steuerungsdaten vom Internet;
- Herunterladen von Software-Updates vom Internet;
- Installation von Software-Updates für den Geräteprozessor im Handgerät;
- Installation von Software-Updates für die Software-Applikation;
- Herstellen einer Verbindung zum Hersteller oder einer vom Hersteller autorisierten Person zwecks Übermittlung von Betriebs- oder Wartungsdaten sowie gegebenenfalls weiterer oben erwähnter Daten und Informationen;
- Plausibilitätsprüfung der Daten bei der Eingabe im App, direkt vor dem Übertragen an das Mobilgerät oder der vom Mobilgerät empfangenen Daten.

Es sind beliebige Kombinationen der oben genannten Funktionen möglich.

Die Software-Applikation kann z. B. auf Betriebssystemen von Smartphones betrieben werden. Bekannte Betriebssysteme sind z. B. Apple iOs, Android, MS Windows Mobile / Phone, RIM / BlackBerryOS, Symbian.

Die Software-Applikation kann beispielsweise als so genannte "APP" von einem Online-Shop auf das Mobilgerät heruntergeladen und installiert werden.

Es ist auch möglich, dass die Software-Applikation auf Betriebssystemen von PC's (Personal Computer) betrieben werden kann. Solche Betriebssysteme sind z. B.: MS Windows 8, Linux, Mac OS X. In diesem Zusammenhang kann vorgesehen sein, dass Daten zwischen einem PC und dem Mobilgerät ausgetauscht werden können. Ein PC kann aufgrund seines grossen Bildschirmes und seiner höheren Rechnerkapazität mehr Auswertemöglichkeiten bieten oder eine schnellere Auswertung ermöglichen.

Die Software-Applikation dient unter anderem dazu, dem Benutzer Daten über sein Pflegeverhalten, wie Reinigungsverhalten, zur Verfügung zu stellen. Die Software-Applikation soll den Benutzer auf diese Weise bei der Durchführung der Körperpflege unterstützen und diesen beispielsweise bei der Verbesserung der Körperpflege. wie Mundhygiene, unterstützen.

Ferner soll die Software-Applikation auch den Eltern helfen, das Pflegeverhalten der Kinder zu überwachen um bei Bedarf beispielsweise korrigierend einzugreifen. Dabei können die Eltern z. B. die Einstellungen wählen und die Analyse der Daten vornehmen.

Die Software-Applikation auf dem Mobilgerät ist beispielsweise in der Lage, die Benutzer- und Betriebsdaten verschiedener Benutzerprofile zu verwalten.

Die Software-Applikation kann z. B. dazu ausgelegt sein, mehrere Benutzprofile für ein einzelnes Handgerät zu verwalten. Dies erlaubt zum Beispiel die Benutzung eines oder mehrerer Handgeräte durch mehrere Benutzer über ein gemeinsames Mobilgerät.

Die Software-Applikation kann ferner z. B. mehrere Körperpflegeprogramme für einen einzelnen Benutzer für ein einzelnes oder mehrere verschiedene Handgeräte verwalten. Der Benutzer kann das gewünschte Körperpflegeprogramm auswählen und über die Software-Applikation auf das Handgerät laden.

Die Software-Applikation kann auch auf Grundlage des identifizierten Handgeräts, welches mit dem Mobilgerät verbunden wird, das dazugehörige Körperpflegeprogramm des angemeldeten Benutzers automatisch auswählen.

So kann die Software-Applikation das betreffende Handgerät bei Kontaktaufnahme über eine Geräte-Identifikation automatisch erkennen und entsprechend das dazugehörige Körperpflegeprogramm für den betreffenden Benutzer, welcher sich zum Beispiel über die Software-Applikation angemeldet hat, laden.

Mehrere Benutzer können so ein gemeinsames Handgerät oder jeweils ein persönliches Handgerät über ein gemeinsames Mobilgerät mit individuellen Benutzereinstellungen bzw. Körperpflegeprogrammen benutzen.

Die Software-Applikation kann auch eine Art Backup-Funktion ausüben, in dem diese die zuletzt im Handgerät gespeicherten individuellen Parameter zum Betrieb des Handgeräts (z.B. eines Körperpflegeprogramms bzw. aktuell angewendete Körperpflegeprogramme) ebenfalls speichert. Bei einem Datenverlust im Handgerät können diese Parameter bzw. kann das komplette Körperpflegeprogramm wieder auf das Handgerät geladen werden.

Die Backup-Funktion kann automatisch durch die Software-Applikation gesteuert oder manuell durch den Benutzer vorgegeben initiiert werden.

Ferner kann die Software-Applikation neben benutzerdefinierten Parametern bzw. Körperpflegeprogrammen noch weitere Daten oder komplette Steuerungsprogramme speichern, um im Falle eines Datenverlusts auf dem Handgerät, diese auf das Handgerät zu laden. Es kann vorgesehen sein, dass die Software-Applikation die genannten Daten mittels einer Backup-Funktion periodisch speichert.

Es kann auch vorgesehen sein, dass die Software-Applikation Referenzdaten, wie Uhrzeit oder Datum, auf dem Handgerät aktualisieren kann. Dies kann z. B. notwendig sein, wenn die Energiezelle vollständig entladen wird und die entsprechenden Referenzdaten dabei verloren gehen.

Weiter kann die Software-Applikation aufgrund der ausgelesenen Daten über die Nutzung des Geräts, die Ladedauerzeiten und bekannten Akkuzustände die Schwellenwerte für die Anzeige des Akkuzustandes anpassen. Beispielsweise wird dem Benutzer bei einem älteren Gerät früher angezeigt, dass es wieder geladen werden muss und es dauert beispielsweise länger um die Vollladung zu erreichen. Die entsprechenden Anpassungen sind selbstverständlich vom Hersteller festgelegt aufgrund der Erfahrungen und auch der technischen Daten und Eigenschaften der einzelnen Bauteile.

Die einzelnen Benutzerprofile können z. B. Passwort geschützt sein. Vorzugsweise besitzt auch jeder Benutzer sein eigenes Körperpflegeelement bzw. Pflegeteil zum Handgerät.

Der jeweilige Benutzer muss sich beispielsweise vor jeder Benutzung bei der Software-Applikation anmelden, so dass das Mobilgerät weiss, welcher Benutzer das Handgerät benutzt. So kann die Software-Applikation beispielsweise das dem angemeldeten Benutzer entsprechende Körperpflegeprogramm auf das Handgerät laden.

Die Software-Applikationen kann ferner neben einem Benutzerbereich auch einen Herstellerbereich enthalten. Der Benutzerbereich ist den Benutzern zugänglich. Hier werden z. B. die Benutzerprofile verwaltet. Der Herstellerbereich ist dahingegen nur dem Hersteller und/oder einer vom Hersteller autorisierten Person vorbehalten.

Die Software-Applikation kann ferner auch einen Daten-Reset erlauben, bei welchem alle gespeicherten Nutzungsdaten gelöscht werden. Der Daten-Reset kann z. B. nur den Benutzerbereich betreffen und andere Bereich, wie Herstellerbereich, ausklammern. Dabei kann Wahlweise die Software/Parameter/Steuerungsdaten des Handgeräts und oder des Mobilgerätes in den Werkszustand zurückgesetzt werden.

Der Herstellerbereich kann Passwort geschützt sein, und somit nur dem Hersteller zugänglich sein. Im Herstellerbereich können z. B. Wartungsdaten oder Betriebs- und Sensordaten abgelegt werden, welche beispielsweise zur Beurteilung von Garantieleistungen herangezogen werden können. Ferner können Betriebs- und Sensordaten dem Hersteller auch wertvolle Informationen über den Einsatz der Geräte durch die Benutzer liefern. Diese Informationen können zum Beispiel die Anzahl Nutzungen, die Nutzungsdauer, die kumulierte Nutzungszeit oder die Anpressdrücke. welchen das Gerät ausgesetzt war, sein. Die Informationen können beispielsweise der Qualitätssicherung dienen oder in die Produktentwicklung einfliessen.

Die Software-Applikation ist beispielsweise dafür ausgelegt, dem Hersteller oder einer vom Hersteller autorisierten Person über ein Kommunikationsnetz Betriebs- und/oder Sensordaten oder Standortdaten zu übermitteln. Die Daten können beispielsweise automatisch, d.h. ohne Dazutun des Benutzers übermittelt werden.

Der Hersteller oder eine von diesem autorisierte Person können die Daten analysieren und beispielsweise darauf basierend geänderte Körperpflegeprogramme bzw. geänderte Betriebsparameter / Steuerungsdaten auf das Mobilgerät hoch laden.

Ferner kann der Hersteller bzw. die autorisierte Person auch Länder spezifische Konfigurationen aufgrund der übermittelten Standortdaten hoch laden. Dies kann beispielsweise aufgrund der ermittelten GPS-Position oder dem ermittelten Ort zum Zeitpunkt der Anmeldung am Mobilgerät geschehen.

Im weiteren kann die Software-Applikation einen Professional-Bereich aufweisen, auf welchen beispielsweise Fachpersonen, im Falle von elektrischen Zahnbürsten z. B. Dermatologen. Zahnärzte oder Dentalhygiene-Fachkräfte, zugreifen können. Dieser Bereich kann ebenfalls Passwort geschützt sein. So können im Professional-Bereich ebenfalls Betriebs- und Sensordaten bereit gestellt werden, welche diese für eine weitere Auswertung auf ein eigenes elektronisches Gerät, z. B. kontaktlos, herunterladen können. Fachpersonen können den Nutzern aufgrund der ausgelesenen Daten Informationen und Tips zur besseren Körperpflege abgeben.

Die betreffende Fachperson kann die Körperpflege, wie Zahnpflege, des Kunden überprüfen und gegebenenfalls eine darauf basierende Beratung durchführen. Ferner kann die Fachperson nötigenfalls die Einstellungen des Handgeräts zur Verbesserung der Gesundheit, wie Mundgesundheit, des Benutzers verändern.

Die Software-Applikation kann auch dazu ausgelegt sein, dass der Vermarkter oder Hersteller bzw. die von diesem autorisierte Person oder eine Fachperson dem Benutzer mittels der Software-Applikation Informationen zustellen kann. Solche Informationen können sein: Promotionen bzw. Werbung, Produkte-Neuigkeiten, persönlich zugeschnittene Werbung, Anpassung des Benutzerhandbuches oder der Geschäftsbedingungen. Ferner können dem Benutzer auf Basis der Auswertung von Nutzerdaten, Haut-, Zahn- oder Zahnfleischanalyse auch konkrete Produkt-Empfehlungen für spezielle Pflegemittel, wie Zahnpasta. Mundspülung, Zahnseide, Interdentalpflege-Geräte, Cremes, Reinigungsmittel, etc, abgeben werden.

Die Software-Applikation kann auch mit so genannten Push-Diensten zusammenarbeiten, mittels welchen der Hersteller bzw. eine von diesem autorisierte Person oder eine Fachperson zielgerichtet Mitteilungen an den Benutzer versenden kann.

Über das Mobilgerät lassen sich ferner auch Software-Updates sowohl für die Prozessoren im Handgerät als auch für die Software-Applikation selbst herunterladen und installieren. Software-Updates für die Software-Applikation können z. B. neue Körperpflegeprogramme oder neue Funktionalitäten, wie z. B. neue Werkzeuge für die statistische Auswertung der Daten beinhalten.

Der genannte Passwort-Schutz kann, wie beschrieben den Zugriff für die einzelnen Anwenderkreise, wie Hersteller, Professionals oder Benutzer, auf bestimmte Bereiche einschränken. Dadurch erhalten die einzelnen Anwenderkreise einen beschränkten Zugriff, so dass diese nicht alle Bereich einsehen können. Ferner kann bei den Zugriffsrechten auch zwischen Schreibrechten und Leserechten unterschieden werden. Es kann aber auch die ganze Applikation durch einen einheitlichen Passwortzugang geschützt sein, so dass all Anwenderkreise über den Passwort geschützten Zugang dieselben Zugriffsrechte erhalten.

Der Passwortschutz muss nicht auf die Software-Applikation im Mobilgerät beschränkt sein, sondern kann auch gekoppelt sein mit dem Zugriff auf den Geräteprozessor oder den Mikrocontroller des Datenübertragungsmoduls im Handgerät , welcher ebenfalls mittels Passwort vor Zugriff geschützt sein können.

Die Kommunikation zwischen Hersteller bzw. Professionals und dem Mobilgerät kann über das Internet oder eine Mobilfunkverbindung erfolgen.

Die Software-Updates können vom Internet, z. B. über eine Website erfolgen. Die Website kann z. B. mit dem Mobilgerät über einen opto-elektronischen Code, z.B. QR-Code, aufgerufen werden. Dieser opto-elektronische Code kann z. B. auf Werbematerial, auf Zahnbürsten, Zahnpastatuben, etc. angebracht sein.

Es ist zum Beispiel möglich, dass gewisse Reinigungsprogramme nur in Anwendung mit gewissen Körperpflegeelementen oder Pflegemitteln, wie Zahnpasten, Hautcremen, Mundwasser, herunter geladen werden können. Es ist zum Beispiel möglich, dass das Reinigungsprogramm/Reinigungsparameter nur über den opto-elektronischen Code, über einen entsprechenden Tag oder über einen Weblink mit Login-Code des entsprechenden Pflegeteils oder Pflegemittels heruntergeladen werden kann.

Das Handgerät kann auf dem Körperpflegeteil bzw. Körperpflegeelement ein optoelektronischer Code, wie QR-Code, angebracht ist, welcher codierte Informationen enthält, die vom Mobilgerät ausgelesen werden können.

So kann mit dem Mobilgerät das Körperpflegeteil erkannt werden. Dies geschieht beispielsweise über das Auslesen eines NFC-Tags, RFID-Tag oder eines opto-elektronischen Codes, wie QR-Code, am Körperpflegeteil mittels Kamera. Die Pflegeteilerkennung kann auch mittels Benutzereingabe erfolgen. Dadurch können auf dem Mobilteil Pflegteil spezifische Pflegemittel aus dem Sortiment des Herstellers/Vermarkters empfohlen werden.

Die Software-Applikation kann auch dafür ausgelegt sein, aufgrund von photographischen Abbildungen, z. B. der Zähne oder der Haut, eine Zahn- bzw. Zahnfleischanalyse (Plaque, Zahnfleischschwund) oder eine Hautanalyse durchzuführen. Die Ergebnisse der Analyse kann bei der Erstellung oder Anpassung von Körperpflegeprogrammen berücksichtigt werden. Enthalten die Mobilgeräte Kameras, so können diese zur Erstellung der entsprechenden photographischen Abbildungen eingesetzt werden.

Generell können die Funktionen verschiedener, standardmässig im Mobilgerät installierten Sensormitteln, wie Kamera, Standortlokalisierungsmittel, Mikrofon, Pulsmesser, Blutdruckmesser, Zeitmesser oder Temperaturmesser dazu benutzt werden, das Benutzerprofil zu ergänzen und/oder während dem Gebrauch des Handgerätes eine Benutzer spezifische Unterstützung bzw. Beratung zu bieten. Bei dieser Unterstützung werden auf die Betriebsdaten und/oder das Nutzerprofil zugegriffen und dem Nutzer angepasste bzw. auf diesen zugeschnittene Vorschläge zur Nutzung erteilt.

So können mittels Kamera des Mobilgeräts Film- oder Bildaufnahmen zwecks Analyse bzw. Auswertung der zu behandelnden Stelle gemacht werden. Die Analyse geschieht über entsprechende Software-Algorithmen.

Basierend auf der Analyse bzw. Auswertung der Bild- bzw. Videodaten können geeignete Körperpflegeparameter oder Körperpflegeprogramme ermittelt werden. Diese können dem Benutzer über das Mobilgerät vorgeschlagen werden. Es ist auch möglich, dass die Körperpflegeparameter oder Körperpflegeprogramme vom Mobilgerät direkt auf das Handgerät übertragen und implementiert werden.

Es ist auch denkbar, dass basierend auf der Analyse bzw. Auswertung der Bild- bzw. Videodaten dem Benutzer über das Mobilgerät Körperpflegehinweise oder anderweitige Informationen mitgeteilt werden. Körperpflegehinweise können zum Beispiel auch konkrete Körperpflegeanweisungen beinhalten.

Anderweitige Informationen können beispielsweise die Empfehlung sein, einen Fachspezialisten, wie Arzt (Hautarzt, Zahnarzt) oder Dentalhygieniker, aufzusuchen. Weitere Information können beispielsweise auch Information zur Beschaffenheit bzw. zum Zustand zu behandelnden Körperstelle sein. Die Informationen können z. B. auch festgestellte Krankheitsbilder oder Anomalien beinhalten.

Die Software-Algorithmen können Teil einer Software-Applikation auf dem Mobilgerät sein. Entsprechend geschieht die Auswertung mittels Mobilgerät.

Die Software-Algorithmen können jedoch auch Teil einer auf einem Drittgerät installierten Software-Applikation sein. In diesem Fall können die Bildaufnahmen über das Mobilgerät mittels einer Mobilfunkverbindung, welche z. B. eine Verbindung zum Internet herstellt. an das Drittgerät übermittelt werden. Das Mobilgerät kann die Auswertedaten bzw. die daraus abgeleiteten Körperpflegeparameter. Körperpflegeprogramme oder Körperpflegeanweisungen über die Mobilfunkverbindung empfangen.

Die zu behandelnden Körperstellen können beispielsweise Hautpartien, Zähne oder Zahnfleisch sein.

Die Kamera kann z. B. über die Software-Applikation gesteuert werden. Die Software-Applikation sorgt dabei für eine geeignete Beleuchtung, welche eine optimale Analyse der Film- oder Bilddaten erlaubt.

Zur Erstellung von Film- oder Bildaufnahmen zu oben genanntem Zwecke kann auch die Kamera eines Drittgerätes eingesetzt werden. Diese Variante weist den Vorteil auf, dass die technische Spezifikation der Kamera auf die besondere Anwendung ausgelegt sein kann, so dass optimale Film- bzw. Bildaufnahmen angefertigt werden können.

Das Drittgerät mit Kamera kann beispielsweise bei der Verkaufs-/Beratungsstelle, beim Arzt oder Fachspezialisten platziert sein, wo auch die Film- oder Bildaufnahmen von geschulten Fachpersonen vorgenommen werden. Die Analyse der Film- oder Bildaufnahmen kann ebenfalls vor Ort geschehen. Auf Grundlage der Analyse können ebenfalls vor Ort das optimale Körperpflegeprogramm bzw. die optimalen Körperpflegeparameter berechnet und auf das Handgerät bzw. auf das Handgerät und/oder Mobilgerät geladen werden.

Gemäss einer weiteren Variante kann das Handgerät selbst eine Kamera zur Erstellung von Film- oder Bildaufnahmen zu oben genanntem Zwecke enthalten. Die Kamera kann z. B. im Pflegekopf oder im Griffkörper des Handgerätes angeordnet sein. Die Film- oder Bilddaten können an das Mobilgerät übertragen werden. Die Auswertung kann ebenfalls über eine Software-Applikation auf dem Mobilgerät erfolgen.

Auf dem Mobilgerät können Software-Algorithmen zur Auswertung der Film- oder Bildaufnahmen installiert sein. Die Software-Algorithmen können in die Software-Applikation integriert sein.

Die Film- oder Bildaufnahmen können jedoch auch über die Software-Applikation zur Analyse an eine externe Analyseeinrichtung, welche entsprechende Software-Algorithmen enthält, versandt werden. Die Analyse-Ergebnisse können wiederum an das Mobilgerät übermittelt werden.

Die Hautanalyse kann z. B. beinhalten, Hauttextur, Hautfehler, Hautporen, Hautfarbe, Helligkeit der Haut. So kann mittels Hautanalyse eruiert werden, ob die Haut trocken oder gut befeuchtet ist. oder ob Hautstörungen wie Akne oder Ekzeme vorliegen.

Die Zahnfleischanalyse kann z. B. beinhalten, ob eine Parodontitis bzw. Zahnfleischschwund vorliegt.

Die Zahnanalyse kann z. B. eine Plaque-Analyse beinhalten.

Die aufgrund der Film- oder Bildanalyse angepassten Körperpflegeparameter können sein: Motorgeschwindigkeit, Drehwinkel des Pflegekopfes, die Dauer der Zeitabschnitte des Zonen-Timers oder der Anpressdruck und/oder Empfehlung spezifischer Pflegemittel im Zusammenspiel mit den Programm bzw. Parametern des Handgeräts.

Ferner kann das aufgrund der Film- bzw. Bildanalyse angepasste Körperpflegeprogramm auch Zusatzfunktion wie Lichtbehandlung, Behandlung mit elektrischem Strom oder Wärme- bzw. Kältebehandlung umfassen.

Ferner können aufgrund der Film- bzw. Bildanalyse Schwellenwerte für Körperpflegeparameter bzw. Abschaltfunktionen neu festgelegt werden. Schwellenwerte bedeutet, dass diese Werte nicht über- bzw. unterschritten werden können.

Die oben genannte Film- bzw. Bildanalyse kann für einzelne Pflegzonen vorgenommen werden, z. B. Stirn, Wange, Kinn. Die Änderungen der Körperpflegeprogramme aufgrund einer solchen Film- bzw. Bildanalyse können insbesondere für einzelne Pflegezonen ausgelegt sein.

Die Änderungen von Körperpflegeprogrammen bzw. von Körperpflegeparametern aufgrund einer solchen Film- bzw. Bildanalyse können dem jeweiligen Benutzer als Vorschlag unterbreitet werden, so dass dieser immer noch selber entscheiden kann, ob er der Empfehlung folgen will.

Das Körperpflegegerät kann so ausgelegt sein, dass die Programmierung nur durch einen Spezialisten vorgenommen werden kann und sonst keine Programmierung durch den Benutzer selbst möglich ist. Dabei kann die Konfiguration auf die beschriebene Weise wie am Verkaufspunkt passieren.

Im Weiteren kann eine elektronische Uhr im Handgerät mittels der Software-Applikation mit einer auf dem Mobilgerät installierten elektronischen Uhr synchronisiert werden. Der Mikrocontroller des Datenverarbeitungsmoduls kann die Uhrfunktion mit dem Geräteprozessor teilen. Der Mikrocontroller des Datenverarbeitungsmoduls stellt z. B. die Uhr-Funktion im Handgerät bereit und versieht die gespeicherten Nutzungsdaten mit der entsprechenden Uhrzeit bzw. dem entsprechenden Datum der Nutzung.

Die Software-Applikation kann auch eine Berater-Funktion enthalten. Die Berater-Funktion ist z. B. dafür ausgelegt, aufgrund der Analysen von Betriebsdaten, Sensordaten und/oder photographischen Abbildungen, Vorschläge über allfällige Pflegemassnahmen (Gesundheitstips), wie besondere Körperpflegeprogramme, Pflegeelementtyp, Häufigkeit und Zeitpunkt von Pflegemassnahmen oder über anzuwendende Pflegemittel, wie Zahnpasta, Zahnspülungen oder Hautcreme zu unterbreiten. Allfällige Empfehlungen aber auch Werbung kann direkt an das Nutzerprofil gekoppelt sein.

Weiter kann die Berater-Funktion in Kopplung mit den Standortbestimmungsmitteln, z. B. einem GPS-Signal, und der Software-Applikation auf dem Mobilgerät aufzeigen, wo dieses Produkt in der Nähe gekauft werden kann.

Weiter kann über die Software-Applikation angegeben werden, wenn das Pflegeelement, z. B. der Bürstenkopf, gewechselt werden soll. In diesem Zusammenhang kann eine Empfehlung für den Kauf eines bestimmten Produktes und gegebenenfalls die örtlich nächste Kaufmöglichkeit abgegeben werden. In der Software-Applikation kann zu diesem Zeitpunkt ebenfalls der Nutzungszähler für die Bürste auf "0" oder "neu" zurück gesetzt werden, damit die Zählung wieder von Neuem beginnt und die nächste Meldung für den Bürstenwechsel zum korrekten Zeitpunkt generiert wird.

Über die Software-Applikation in Koppelung mit dem Handgerät können weitere Zustände ermittelt werden, die eine Aktion des Benutzers fordern, um z. B. die Funktion weiterhin einwandfrei auszuführen. Bei Mundduschen kann dies z. B. eine Meldung zum Entkalken sein.

Bei Zahnbürsten welche mit einer Sekundärzelle betrieben werden, kann dies eine Meldung zum optimalen Laden oder zur Verbesserung der Lebensdauer der Sekundärzelle sein. Dies kann beispielsweise mit dem technischen Zustand der Energiezelle gekoppelt sein.

Bei Zahnbürsten, welche mit Primärzellen betrieben werden, kann eine Meldung zum Wechsel der Primärzellen erfolgen. Die Meldung kann z. B. die Energiereserve in %-Angabe oder die Restlaufzeit des Handgeräts beinhalten. Auf diese Weise kann zum richtigen Zeitpunkt ein Ersatz der Primärzellen bereit gestellt werden.

Die oben beschriebenen Ausgestaltungsvarianten sind beispielhaft. Im Rahmen der Erfindung können die einzelnen Ausprägungen und Elemente dieser Ausgestaltungsvarianten mit anderen Ausgestaltungsvarianten kombiniert werden ohne den Rahmen dieser Erfindung zu verlassen.

Das Erfassen und Auswerten von Betriebs- und Sensordaten erlaubt eine Optimierung der Körperpflege. Gleiches gilt für die Erfassung von benutzerdefinierten Einstellungen. Die optimierte Körperpflege kann bei einer elektrischen Zahnbürste z. B. eine verbesserte Zahnreinigung bzw. eine schonende Zahnreinigung sein.

Grundsätzlich erlaubt das erfindungsgemässe Handgerät bzw. die erfindungsgemässe Funktionseinheit einen individualisierten Betrieb des Handgerätes, welcher beispielsweise auf die Wünsche des Benutzer, auf benutzerspezifische Eigenschaften, wie Geschlecht, Alter, Gewicht, Gesundheitszustand sowie auf die Gewohnheiten des Benutzers, ausgerichtet ist.

Ferner lässt das erfindungsgemässe Handgerät bzw. Funktionseinheit auch den individualisierten Betrieb des Handgerätes für mehrere Benutzer zu. So können beispielsweise für mehrere Benutzer, welche dasselbe Handgerät benutzen, im Mobilgerät individuelle Benutzerprofile mit den entsprechenden individuellen betriebsrelevanten Daten angelegt werden.

Mit dem Laden der Daten vom Handgerät auf das Mobilgerät, werden die Nutzungsdaten beispielsweise vom Speicher im Handgerät gelöscht, da die Speicherkapazität begrenzt ist.

Das Handgerät kann so programmiert sein, dass es beispielsweise mittels Lichtsignalen angibt, dass das Gerät mit der Software-Applikation synchronisiert werden soll, z. B. wenn der Speicher des Handgeräts voll ist. Wird trotz des vollen Speichers nicht ausgelesen, werden die ältesten Daten überschrieben, damit die Protokollierung weiterhin erfolgen kann.

Die Steuerungs- und Betriebsdaten können über die Software-Applikation in verschiedenen Backups gespeichert werden. Beispielsweise kann bei Verbindung der Software-Applikation mit einem PC auch ein Datenbackup durchgeführt werden. Weiters können die Daten mittels Cloud-Computing in einer "Daten-Cloud" gespeichert werden.

Die Software-Applikation kann auch ein elektronisches Benutzer-Handbuch enthalten, welchem man z.B. durch Blättern oder über eine Suchfunktion Benutzerinformationen entnehmen kann. Die Software-Applikation bzw. das elektronische Benutzer-Handbuch kann auch Videos bzw. Video-Anleitungen enthalten. Das elektronische Benutzer-Handbuch kann auch Links zu Video-Anleitungen enthalten, welche über das Internet abgerufen werden können.

Die Software-Applikation kann für das Backup und die weitergehende Analyse der Steuerungs-, Betriebsdaten und Nutzerdaten auch mit einer Exportfunktion ausgestattet sein. Auf diese Weise lassen sich die Daten z. B. in einem bekannten Standardformat, wie CSV-Datei, exportieren. Damit kann die Datei wiederum in ein anderes Mobilgerät bzw. Handgerät eingelesen werden.

Die Software-Applikation kann auch mit den gängigen Social Media Plattformen, wie Facebook, gekoppelt sein. So kann zum Beispiel das persönliche Zähneputzen mit anderen Teilnehmern geteilt werden. Es können beispielsweise verschiedene Nutzerdaten, wie die Reinigungsdauer, miteinander verglichen werden. Ferner kann angezeigt werden, wer zu welcher Zeit wo die Zähne gereinigt hat.

In der Software-Applikation können auch Feedback- und Fragefunktionen integriert sein, die den Nutzer beispielsweise mit dem Hersteller oder Fachpersonen (Professionals) in Kontakt treten lassen. Dies ist eine weitere Interaktionsmöglichkeit für die Verbesserung der persönlichen Nutzungsgewohnheiten.

Der erfolgreiche Aufbau einer Verbindung zwischen dem Mobilgerät und dem Handgerät kann bei einem oder bei beiden Geräten für den Benutzer wahrnehmbar bestätigt werden. Es ist insbesondere eine Bestätigung in visueller Form, z. B. durch ein Leuchtmittel, in akustischer Form, z. B. durch ein Geräusch, funktionsmässig, z. B. durch Aufstarten des Motors, in taktiler Form oder durch eine Kombination davon möglich.

Ferner ist es auch möglich, dass das Handgerät mittels Eingabe einer Schalterkombination über ein externes Gerät, z. B. drahtlos, bzw. mechanisch programmierbar ist. So kann das Handgerät beispielsweise über den Ein-/AusSchalter programmierbar sein. Eine Schalterkombination kann z. B. über die Anzahl der Betätigung (Drücken) eines Schalters und den Zeitabständen zwischen dem Drücken der Schalter definiert sein. Eine Schalterkombination kann auch über eine Kombination von abwechselnder Betätigung (Drücken) mehrer Schalter definiert sein.

Das externe Gerät kann ein Zusatzgerät zum Mobilgerät oder selber ein Mobilgerät sein.

So können durch spezifische Schalterkombinationen Gerätekonfigurationen, insbesondere spezifische Körperpflegeprogramme bzw. Benutzerprofile vom externen Gerät heruntergeladen beziehungsweise durch die entsprechende Schalterkombination direkt über den Schalter auf das Gerät programmiert werden.

Andererseits kann auch vorgesehen sein, dass durch spezifische Tastenkombinationen Körperpflegeprogramme bzw. Benutzerprofile vom Handgerät auf ein externes Gerät heruntergeladen werden

Es kann auch vorgesehen sein, dass auf dem Handgerät mehrere Körperpflegeprogramme oder Körperpflegeparameter bereits ab Werk gespeichert sind und über eine Schalterkombination ein spezifisches Körperpflegeprogramm bzw. spezifische Körperpflegeparameter aktiviert werden.

Es kann auch vorgesehen sein, dass über eine Schalterkombination am Handgerät Körperpflegeparameter geändert werden können.

So kann das Handgerät unabhängig von der Software-Applikation programmiert, d.h. es können unabhängig von der Software-Applikation die entsprechende Körperpflegeprogramme auf das Handgerät geladen oder aktiviert werden.

Die Software-Applikation auf dem Mobilgerät kann dabei den Benutzer durch die Programmierung führen. Dabei kann die Abfolge / Reihenfolge des Betätigens des Ein-/Ausschalters und des nicht Betätigens mit entsprechenden zeitlichen Unterbrüchen in der Software-Applikation gezeigt werden und der Benutzer repetiert den Angezeigten Ablauf mit dem Ein-/Ausschalter. Die Software-Applikation führt den Benutzer als Guide durch die Programmierung.

So können beispielsweise Körperpflegeprogramme oder Benutzerprofile über die oben beschriebene Art der Programmierung an der Verkaufsstelle auf das Handgerät geladen werden.

Die Software-Applikation kann ferner dazu ausgelegt sein, Plausibilitätsprüfungen der Daten durchzuführen. Dies kann in verschiedenen Schritten passieren:
1. Bei der Eingabe der benutzerspezifischen Daten (z.B. Name oder Funktionswahl)
2. Vor der Übermittlung von Daten vom Handgerät an das Mobilgerät
3. Beim Empfang der Daten vom Mobilgerät auf dem Handgerät

Es soll vermieden werden, dass "falsche" bzw. nicht korrekte Daten verschoben werden und so einen Programmabsturz verursachen oder beispielsweise das Handgerät oder die Software-Applikation so blockieren, dass es/sie in dem Moment nicht mehr verwendet werden kann.

Weiter kann der Prüfung ebenfalls ein Korrekturprogramm angegliedert sein, sodass die Daten korrigiert und anschliessend trotzdem verwendet werden können. Dies kann automatisch oder manuell initiiert werden. So dass der Benutzer entweder selbst agieren muss und den Misstand beheben muss oder dass dies im Hintergrund automatisch passiert und der Benutzer nichts damit zu tun hat.

Die Korrektur kann so verlaufen, dass die korrekten Werte belassen werden und nur die fehlerhaften Werte korrigiert oder auf einen Wert gesetzt werden der beispielsweise eine Übermittlung zulässt und aber eindeutig kennzeichnet, dass dies ein vom Programm gesetzter Wert ist.

Im Folgenden wird der Erfindungsgegenstand anhand von Ausführungsbeispielen, welche in den beiliegenden Zeichnungen dargestellt sind, näher erläutert. Es zeigen jeweils schematisch:
- Figur 1:: ein erstes Kommunikationsschema;
- Figur 2:: ein zweites Kommunikationsschema;
- Figur 3:: ein drittes Kommunikationsschema;
- Figur 4:: ein viertes Kommunikationsschema;
- Figur 5a: eine elektrische Zahnbürste mit Bürstenaufsteckteil in Draufsicht von der Oberseite bzw. Vorderseite;
- Figur 5b: eine elektrische Zahnbürste mit Bürstenaufsteckteil in Seitenansicht;
- Figur 5c:: eine elektrische Zahnbürste mit Bürstenaufsteckteil in Draufsicht von der Unterseite bzw. Rückseite;
- Figur 6:: eine elektrische Zahnbürste aufgesetzt auf ein Ladegerät;
- Figur 7:: ein Ladegerät für eine elektrische Zahnbürste;
- Figur 8a:: eine Einschubeinheit mit Elektronikteil für eine elektrische Zahnbürste nach Figur 5 bis 6 in einer Seitenansicht;
- Figur 8b:: die Einschubeinheit nach Figur 8a in einer Draufsicht von der Oberseite bzw. Vorderseite;
- Figur 9:: einen Teilschnitt durch eine elektrische Zahnbürste nach Figur 5 bis 6;
- Figur 10:: einen elektrischen Nassrasierer;
- Figur 11:: einen elektrischen Mascara-Applikator;
- Figur 12:: ein elektrisches Gesichtsmassage-Gerät;
- Figur 13:: ein Speicher-Schema;
- Figur 14a:: eine perspektivische Ansicht der Rückseite einer erfindungsgemässen Gesichtsbürste;
- Figur 14b:: eine perspektivische Ansicht der Vorderseite der erfindungsgemässen Gesichtsbürste nach Figur 14a;
- Figur 14c:: eine Querschnittsansicht der erfindungsgemässen Gesichtsbürste nach Figur 14a und 14b.

Grundsätzlich sind in den Figuren gleiche Teile mit gleichen Bezugszeichen versehen. Die beschriebenen Ausführungsbeispiele stehen beispielhaft für den Erfindungsgegenstand und haben keine beschränkende Wirkung. Die Merkmale einzelner Figuren lassen sich, wo Sinn ergebend, mit Merkmalen anderer Figuren kombinieren.

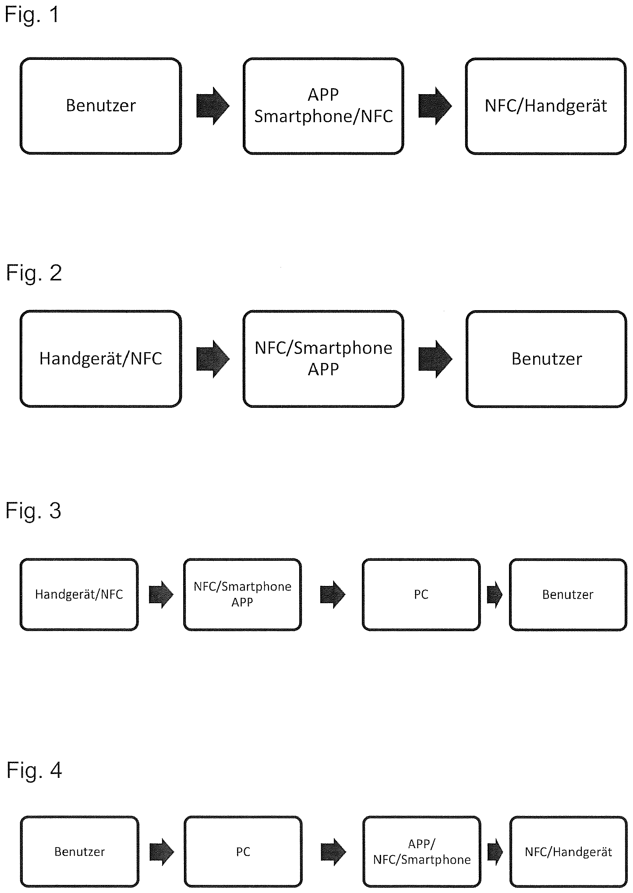

Das Kommunikationsschema nach Figur 1 zeigt den Datenfluss vom Benutzer über ein Mobilgerät, beispielsweise wie hier ein Smartphone, auf das Handgerät mittels NFC-Übertragungs-Technologie. Der Benutzer nimmt über das Mobilgerät mittels der darauf installierten Software-Applikation z. B. benutzerspezifische Einstellungen am Handgerät vor.

Das Kommunikationsschema nach Figur 2 zeigt den Datenfluss vom Handgerät über ein Mobilgerät, beispielsweise wie hier ein Smartphone, zum Benutzer mittels NFC-Übertragungs-Technologie. Vom Handgerät werden beispielsweise Betriebs- und Sensordaten an das Mobilgerät übermittelt. Die Daten werden beispielsweise von einer Software-Applikation im Mobilgerät ausgewertet und dem Benutzer in Form von aufbereiteten Informationen in der Software-Applikation angezeigt.

Das Kommunikationsschema nach Figur 3 zeigt den Datenfluss vom Handgerät über ein Mobilgerät, beispielsweise wie hier ein Smartphone, zu einem PC. Daten werden vom Handgerät mittels NFC-Übertragungs-Technologie an eine Smartphone übermittelt. Das Mobilgerät wird an einen PC angeschlossen und übermittelt die Daten an den PC. Die Datenübermittlung an den PC kann auch drahtlos erfolgen. Die Datenübertragung wird über die Software-Applikation auf dem Mobilgerät gesteuert. Auf dem PC ist dieselbe oder eine andere Software-Applikation installiert, welche eine Auswertung und Analyse der Daten erlaubt.

Das Kommunikationsschema nach Figur 4 zeigt den Datenfluss vom Benutzer über einen PC und ein Mobilgerät, beispielsweise wie hier ein Smartphone, auf das Handgerät. Über eine auf einem PC installierte Software-Applikation werden am PC benutzerspezifische Daten vom Benutzer erfasst. Die Daten werden vom PC drahtlos oder über eine temporäre Leitungsverbindung auf ein Mobilgerät übertragen. Auf dem Mobilgerät ist dieselbe oder eine andere Software-Applikation installiert, welche die Übertragung der Daten vom PC auf das Mobilgerät und vom Mobilgerät auf das Handgerät steuert. Die Daten können mittels der entsprechenden Software-Applikation am PC und/oder auf dem Mobilgerät vor der Weiterleitung an das Handgerät in Betriebsparameter bzw. Steuerungsdaten umgewandelt werden. Vom Mobilgerät werden die Daten mittels der Software-Applikation drahtlos mit NFC-Technologie auf das Handgerät übertragen.

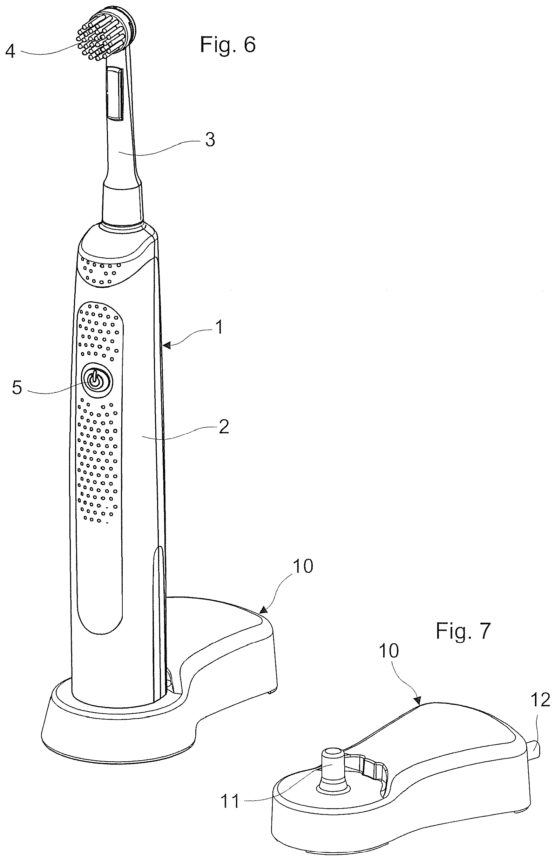

Die Figuren 6 und 7 zeigen beispielhaft eine elektrische Zahnbürste 1 mit einem Ladegerät 10. Die elektrische Zahnbürste 1 umfasst einen Griffkörper 2 und einen auf den Griffkörper 2 aufsteckbaren Pflegeteil 3 mit einem runden Bürstenkopf 4. Im Griffkörper 2 ist ein Schalter 5 zum Ein- und Ausschalten der elektrischen Zahnbürste angeordnet.

Das Ladegerät 10 ist über ein Netzkabel 12 mit einem Stromnetz verbindbar. Das Ladegerät 10 enthält einen Aufsteckdorn 11, über welchen die elektrische Zahnbürste 1 auf das Ladegerät 10 aufsteckbar ist.

Eine mögliche Antenne im Ladegerät für eine Kommunikation mit einem Mobilgerät 21 kann insbesondere direkt hinter der Ebene zwischen dem Aufsteckdorn 11 und dem Eintrittspunkt des Netzkabels 12 in das Gehäuse des Ladegeräts 10 angeordnet sein.

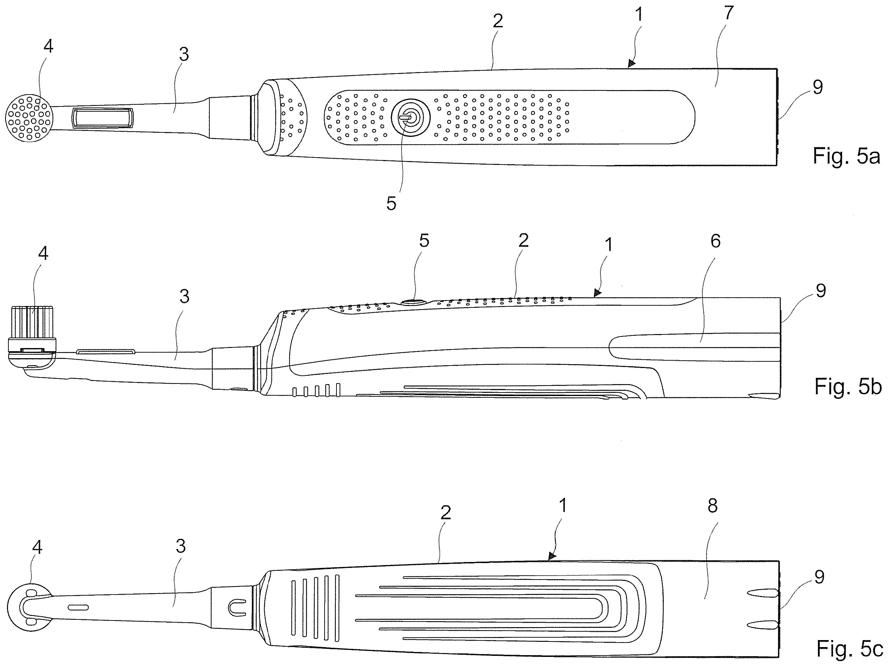

Die Figur 5a zeigt die Zahnbürste 1 nach Figur 6 von der Oberseite. Die Figur 5b zeigt die Zahnbürste nach Figur 6 von der Seite. Die Figur 5c zeigt die Zahnbürste 1 nach Figur 6 von der Unterseite.

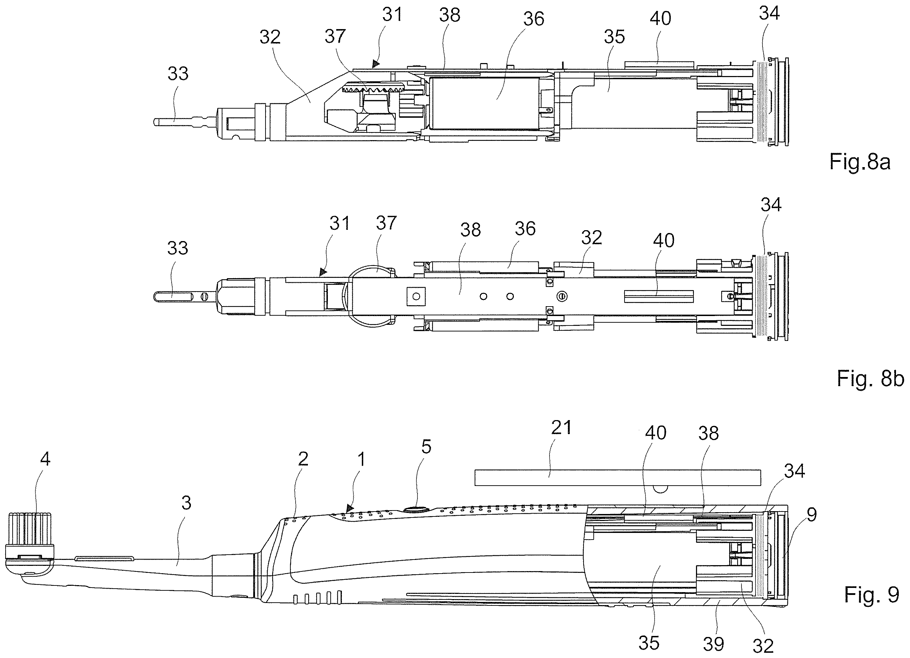

Die Figuren 8a und 8b zeigen die Einschubeinheit 31 für die Zahnbürste 1 nach Figur 6. Die Einschubeinheit 31 wird wie in Figur 9 gezeigt in das Gehäuse 39 des Griffkörpers 2 eingeschoben. Das Einschieben erfolgt über eine, dem Pflegeteil 3 entgegen gesetzt angeordnete Einschuböffnung am Ende des Gehäuses 39. Die Einschuböffnung ist mittels eines Verschlussdeckels 9 verschliessbar.

Die Einschubeinheit 31 enthält eine mehrteilige Trägerstruktur 32 aus Kunststoff, an welchem die Komponenten der Einschubeinheit 31 befestigt sind. Die Komponenten der Einschubeinheit 31 sind über Elemente der Trägerstruktur 32 zu einer Einschubeinheit 31 zusammengesteckt.

Die Trägerstruktur 32 ist ferner zwischen den beiden Enden der Einschubeinheit 31 nicht durchgehend ausgebildet. Die Elemente der Trägerstruktur 32 sind mittels bekannter Verbindungstechniken, wie Formschlussverbindungen (Steckverbindungen, Schnappverbindungen) zusammen mit den Komponenten zur Einschubeinheit 31 verbunden.

Mit der Trägerstruktur 32 sind eine Energiezelle 35, ein elektromotorischer Antrieb 36, eine Übertragungsmechanik 37 und eine Antriebsachse 33 verbunden. Der Pflegeteil 3 mit dem Bürstenkopf 4 ist auf die Antriebsachse 33 aufsteckbar.

An der Trägerstruktur 32 ist ferner eine Leiterplatte 38 mit einem Geräteprozessor und einem Datenübertragungsmodul zur drahtlosen Übermittlung von Daten an ein Mobilgerät mittels NFC angeordnet. Die Antenne 40 des Datenübertragungsmoduls ist eine Antenne bzw. Ferritantenne mit einem Ferritkern.

An der Trägerstruktur 32 ist im Weiteren eine Induktionsspule 34 zum kontaktlosen Aufladen der Energiezelle 35 am Ladegerät 10 angeordnet.

Der Geräteprozessor auf der Leiterplatte 38 steuert den elektromotorischen Antrieb 36. Die Motorachse des elektromotorischen Antriebs 36 sowie die Antriebsachse 33 sind über die Übertragungsmechanik 37 miteinander in Wirkverbindung. Die Übertragungsmechanik 37 ist so ausgebildet, dass eine Drehbewegung der Motorwelle in eine Hin- und Herbewegung der Antriebsachse 33 umgewandelt wird. Die Antriebsachse 33 wirkt wiederum mit einer Bewegungsmechanik im Pflegeteil 3 zusammen (nicht gezeigt), welche die Hin- und Herbewegung der Antriebsachse 33 in eine Oszillationsbewegung des Bürstenkopfes 4 umwandelt.

Die Leiterplatte 38 mit dem Datenübertragungsmodul ist in eingebautem Zustand zur Oberseite der Zahnbürste gerichtet und liegt nahe an der Gehäusewand. Zur Übermittlung von Daten zwischen Mobilgerät 21 und der Zahnbürste 1 wird das Mobilgerät 21 mit seiner Antenne möglichst nahe an die Oberseite des Griffkörpers 2 gehalten, so dass der Abstand zwischen der Antenne des Mobilgeräts 21 und dem Datenübertragungsmodul bzw. dessen Antenne 40 im Griffkörper 2 der Zahnbürste 1 möglichst gering ist.

Das elektrische Handgerät zur Körperpflege mit den erfindungsgemässen Merkmalen kann, wie oben bereits beschrieben, auch in einer anderen Ausführungsform als die einer elektrischen Zahnbürste vorliegen.

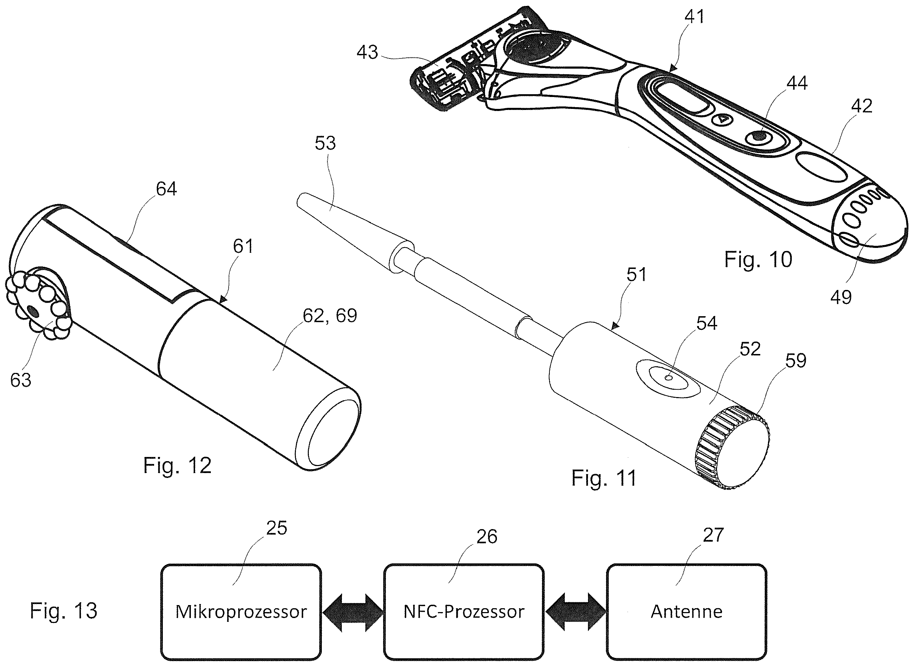

Die Figur 10 zeigt z. B. einen Nassrasierer 41 mit elektrischen Elementen. Der Nassrasierer 41 ist erfindungsgemäss mit einem Datenübertragungsmodul zur drahtlosen Kommunikation mit einem Mobilgerät mittels z. B. NFC-Technologie ausgebildet. Der elektrische Nassrasierer 41 enthält einen Griffkörper 42 sowie einen Klingenkopf 43. Der Nassrasierer 41 enthält einen elektromotorischen Antrieb (nicht gezeigt) zur Erzeugung von Schwingungen im Klingenkopf 43. Im Griffkörper 42 ist ein Schalter 44 zum Ein- und Ausschalten des Nassrasierers 41 vorgesehen.

Die Figur 11 zeigt einen elektrischen Mascara-Applikator 51, welcher erfindungsgemäss mit einem Datenübertragungsmodul zur drahtlosen Kommunikation mit einem Mobilgerät mittels NFC-Technologie ausgebildet ist. Der elektrische Mascara-Applikator 51 enthält einen Griffkörper 52 sowie einen Applikationskopf 53. Der Applikationskopf 53 kann als Bürste ausgebildet sein. Der Mascara-Applikator 51 enthält einen elektromotorischen Antrieb (nicht gezeigt) zur Erzeugung von Vibrationen im Applikationskopf 53. Im Griffkörper 52 ist ein Schalter 54 zum Ein- und Ausschalten des Mascara-Applikators 51 vorgesehen.

Die Figur 12 zeigt ein elektrisches Gesichtsmassage-Gerät 61, welches erfindungsgemäss mit einem Datenübertragungsmodul zur drahtlosen Kommunikation mit einem Mobilgerät mittels NFC-Technologie ausgebildet ist. Das elektrische Gesichtsmassage-Gerät 61 enthält einen Griffkörper 62 sowie einen Massagekopf 63. Der Massagekopf 63 enthält einen elektromotorischen Antrieb (nicht gezeigt) zur Erzeugung einer Dreh- oder Vibrationsbewegung des Massagekopfes 63. Im Griffkörper 62 ist ein Schalter 64 zum Ein- und Ausschalten des Gesichtsmassage-Geräts 61 vorgesehen.

Die Figur 13 zeigt ein Daten-Speicherschema für das Handgerät. Der NFC-Prozessor (Kommunikationsprozessor) 26 enthält zwei Schnittstellen - eine erste Schnittstelle für eine Kommunikationsverbindung mit dem Geräteprozessor 25 sowie eine zweite Schnittstelle für eine Kommunikationsverbindung zu einem HF (Hochfrequenz)-Teil mit Antenne 27. Die Kommunikation über die beiden Schnittstellen erfolgt jeweils bidirektional.

Daten, welche nun vom Geräteprozessor 25 zum NFC-Prozessor 26 übermittelt werden, werden in einem dem NFC-Prozessor 26 zugeordneten permanenten Speicher zwischengespeichert, bevor diese über die zweite Schnittstelle dem HF-Teil 27 und über diesen an ein Mobilgerät übermittelt werden.

Umgekehrt werden Daten, die von einem Mobilgerät über den HF-Teil 27 empfangen und über die zweite Schnittstelle dem NFC-Prozessor 26 weitergeleitet werden, im permanenten Speicher zwischengespeichert, bevor diese über die erste Schnittstelle dem Geräteprozessor 25 übermittelt werden.

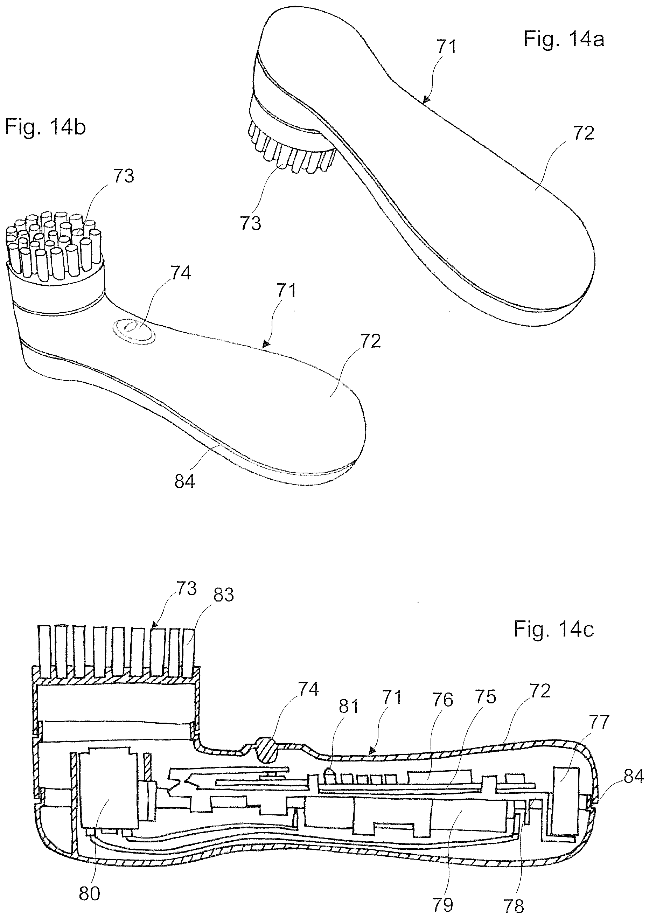

Die Figuren 14a bis 14c zeigen eine elektrische Gesichtsbürste 71, welche, wie nachfolgend noch genauer beschrieben, erfindungsgemäss mit einem Datenübertragungsmodul zur drahtlosen Kommunikation mit einem Mobilgerät mittels NFC-Technologie ausgerüstet ist.

Die elektrische Gesichtsbürste 71 enthält einen Griffkörper 72 sowie einen aufsteckbaren Bürstenkopf 73 mit einer Mehrzahl von Borsten oder Borstenbündeln 83. Die elektrische Gesichtsbürste 71 enthält einen elektromotorischen Antrieb 80, welcher zur Erzeugung einer Dreh- und/oder Vibrationsbewegung im Bürstenkopf 73 mit dem Bürstenkopf 73 zusammenwirkt. Vibrationen werden über ein Exzenter-Element im elektromotorischen Antrieb 80 erzeugt und auf den Bürstenkopf 73 übertragen.

Im Griffkörper 72 ist ein Schalter 74 zum Ein- und Ausschalten der Gesichtsbürste 71 vorgesehen. Im Griffkörper 72 ist ferner eine Leiterplatte 75 angeordnet. Auf der Leiterplatte 75 ist ein NFC-Modul 76 mit einer Sende- und Empfangseinheit angeordnet. Auf der Leiterplatte 75 ist ferner eine LED-Anzeige 81 für Statusanzeigen angeordnet. Im Griffkörper 72 ist im Weiteren eine Sekundärzelle 79 sowie eine Induktionsspule 77 zum Aufladen der Sekundärzelle 79 angeordnet. Ferner ist im Griffkörper 72 auch eine Antenne angeordnet, welche jedoch in der vorliegenden Darstellung nicht explizit gezeigt ist. Die Antenne ist im NFC-Modul 76 integriert.

Die Leiterplatte 75, die Sekundärzelle 79, das NFC-Modul 76 und die Induktionsspule 77 sind über eine Trägerstruktur 78 zu einer Montageeinheit verbunden. Die Gehäusewand des Griffkörpers 72 ist über eine Fügenaht 84 in zwei Halbschalen teilbar, wodurch ein Zugang zum Inneren des Griffkörpers 72 geschaffen wird. Der Griffkörper 72 wird jedoch bei der Herstellung so verschlossen, dass er nur durch Zerstörung des Gehäuses wieder zugänglich ist.

## Patentansprüche

1. Elektrische Gesichtsbürste, welche als Handgerät (61, 71) ausgelegt ist, zur Pflege von Hautpartien im Gesicht mittels einer Pflegebürste (63, 73) und Ausübung mindestens einer elektrisch betriebenen Gesichtspflegefunktion, enthaltend einen Griffkörper (62, 72) zum Halten der Gesichtsbürste (61, 71), im Weiteren enthaltend einen Elektronikteil (75) zur Steuerung der mindestens einen elektrisch betriebenen Gesichtspflegefunktion,
**dadurch gekennzeichnet, dass**
der Elektronikteil (75) ein Datenübertragungsmodul zur drahtlosen, bidirektionalen Datenübertragung mit einem elektronischen Mobilgerät mittels Nahfeldkommunikations-Technologie (Near Field Communication, NFC) enthält, und das Datenübertragungsmodul:
- einen Mikrocontroller,
- mindestens einen Speicher zur Speicherung von Daten, und
- eine im Griffkörper (2) angeordnete Antenne (76)
enthält, wobei das Datenübertragungsmodul dafür ausgelegt ist, mindestens einen Teil der für seinen Betrieb notwendigen elektrischen Energie kontaktlos über elektromagnetische Wellen, welche vom Mobilgerät erzeugt werden und in deren Einflussbereich die dazugehörige Antenne liegt, zu beziehen.

2. Gesichtsbürste (61, 71) zur Gesichtspflege gemäss Anspruch 1, **dadurch gekennzeichnet, dass** das Datenübertragungsmodul einen permanenten Speicher enthält.

3. Gesichtsbürste (61, 71) zur Gesichtspflege gemäss einem der Ansprüche 1 bis 2, **dadurch gekennzeichnet, dass** der Elektronikteil (75) einen weiteren Mikrocontroller zur Steuerung der elektrischen Gesichtspflegefunktion enthält.

4. Gesichtsbürste (61, 71) zur Gesichtspflege gemäss einem der Ansprüche 1 bis 3, **dadurch gekennzeichnet, dass** die Gesichtsbürste (61, 71) zur Ausführung der elektrischen betriebenen Gesichtspflegefunktion ein elektrisches Funktionsorgan (80) enthält.

5. Gesichtsbürste (61, 71) zur Gesichtspflege gemäss Anspruch 4, **dadurch gekennzeichnet, dass** das elektrische Funktionsorgan:
- ein elektromotorischer Antrieb (80) zur mechanischen Bewegung der Pflegebürste;
- eine elektrische Heizung zum Aufheizen eines Gesichtspflegeelements;
- eine UV-Einrichtung zur Erzeugung von UV-Licht zur Desinfektion der Gesichtsbürste oder Teilen davon oder
- eine Pumpe zum Fördern eines Fluidsist.

6. Gesichtsbürste (61, 71) zur Gesichtspflege gemäss einem der Ansprüche 1 bis 5, **dadurch gekennzeichnet, dass** der Elektronikteil (75) dafür ausgelegt ist, dass Daten vom Datenverarbeitungs- und Steuerprozessor und/oder dass Daten vom Mobilgerät auf dem nicht-flüchtigen Speicher des Datenübertragungsmoduls gespeichert werden können.

7. Gesichtsbürste (61, 71) zur Gesichtspflege gemäss einem der Ansprüche 1 bis 6, **dadurch gekennzeichnet, dass** die Gesichtsbürste (61, 71) einen Feuchtigkeitssensor zur Messung der Hautfeuchtigkeit enthält.

8. Gesichtsbürste (61, 71) zur Gesichtspflege gemäss einem der Ansprüche 1 bis 7, **dadurch gekennzeichnet, dass** die Gesichtsbürste (61, 71) ein elektrisches Funktionsorgan in Ausführung einer Ionisierungseinrichtung zur Erzeugung eines Stromflusses auf der Haut des Benutzer durch Ionisierung, enthält.

9. Gesichtsbürste (61, 71) zur Gesichtspflege gemäss einem der Ansprüche 1 bis 8, **dadurch gekennzeichnet, dass** die Gesichtsbürste (61, 71) eine Kamera zur Erstellung von Film- oder Bildaufnahmen zwecks Analyse der zu behandelnden Hautpartie enthält.

10. Gesichtsbürste (61, 71) zur Gesichtspflege gemäss Anspruch 9, **dadurch gekennzeichnet, dass** die Kamera im Pflegekopf oder im Griffkörper der Gesichtsbürste (61, 71) angeordnet ist.

11. Funktionseinheit enthaltend:
- eine Gesichtsbürste (61, 71) zur Gesichtspflege nach einem der Ansprüche 1 bis 10, und
- ein elektronisches Mobilgerät (21), wobei das elektronische Mobilgerät (21) eine aktive Sende- und Empfangseinheit zur bidirektionalen, drahtlosen Datenübertragung zwischen der Gesichtsbürste (61, 71) und dem Mobilgerät (21) enthält.

12. Funktionseinheit nach Anspruch 11, enthaltend:
- ein Ladegerät (10) zum kontaktlosen Aufladen der Gesichtsbürste (1) zur Gesichtspflege, wobei das Ladegerät (10) ein Datenübertragungsmodul zur uni- bzw. bidirektionalen, drahtlosen Datenübertragung zwischen dem Datenübertragungsmodul der Gesichtsbürste (1) und dem Datenübertragungsmodul des Ladegeräts (10) enthält.

13. Funktionseinheit nach Anspruch 12, **dadurch gekennzeichnet, dass**
- die Sende- und Empfangseinheit des elektronischen Mobilgeräts (21) zur uni- oder bidirektionalen, drahtlosen Datenübertragung zwischen dem Ladegerät (10) und dem Mobilgerät (21) ausgelegt ist, und
- das Datenübertragungsmodul des Ladegeräts (10) zur uni- oder bidirektionalen, drahtlosen Datenübertragung zwischen dem Mobilgerät (21) und dem Ladegerät (10) ausgelegt ist.

14. Verfahren zum Einstellen und Übergeben von Betriebsparametern und Steuerungsdaten einer elektrischen Gesichtsbürste, welche als Handgerät ausgelegt ist, mittels eines Mobilgerätes, wobei über eine auf dem Mobilgerät betriebene Software-Applikation Gesichtspflegeparameter und/oder Gesichtspflegeprogramme drahtlos auf die elektrische Gesichtsbürste übertragen werden.

15. Verfahren nach Anspruch 14, **dadurch gekennzeichnet, dass** vom Mobilgerät und der darauf betriebenen Software-Applikation Betriebsdaten der Gesichtsbürste drahtlos empfangen und ausgewertet werden.

16. Verfahren nach Anspruch 14 oder 15, **dadurch gekennzeichnet, dass** vom Mobilgerät und der darauf betriebenen Software-Applikation Sensordaten der Gesichtsbürste drahtlos empfangen und ausgewertet werden.

17. Verfahren nach einem der Ansprüche 14 bis 16, **dadurch gekennzeichnet, dass** mittels einer im Mobilgerät installierten Kamera wenigstens eine Bild- oder Videoaufnahme der zu behandelnden Hautpartie im Gesichts erstellt wird und die wenigstens eine Bild- oder Videoaufnahme über eine Software-Applikation ausgewertet und basierend auf der Auswertung geeignete Gesichtspflegeparameter oder Gesichtspflegeprogramme ermittelt und über das Mobilgerät dem Benutzer vorgeschlagen bzw. auf die Gesichtsbürste übertragen werden oder über das Mobilgerät Gesichtspflegehinweise oder anderweitige Informationen dem Benutzer mitgeteilt werden.

18. Verfahren nach einem der Ansprüche 14 bis 17, **dadurch gekennzeichnet, dass** die Gesichtsbürste (61, 71) einen Feuchtigkeitssensor enthält, mittels welchem die Feuchtigkeit der Haut gemessen wird.

19. Verfahren nach einem der Ansprüche 14 bis 18 , **dadurch gekennzeichnet, dass** die Gesichtsbürste (61, 71) eine Kamera zur Erstellung von Film- oder Bildaufnahmen zwecks Analyse der zu behandelnden Hautpartie gemacht werden enthält, und die Die Film- oder Bilddaten an das Mobilgerät zur Analyse der zu behandelnden Hautpartie übertragen werden.

## Claims

1. An electrical facial brush (61,71) which designed as a hand held device, for the care of skin portions of the face by means of a care brush (63, 73) and for carrying out at least one electrically operated facial care function, containing a grip body (62, 72) for holding the facial brush (61, 71), moreover comprising an electronics part (75) for the control of the at least one electrically operated facial care function,
**characterised in that**
the electronics part (75) comprises a data transmission module for the wireless, bidirectional data transmission with an electronic mobile device by means of near field communication (NFC), and the data transmission module comprises:
- a microcontroller,
- at least one memory for storing data and
- an antenna (76) arranged in the grip part (2),
wherein the data transmission module is designed so as to obtain at least a part of the electrical energy necessary for its operation, in a contact-free manner via electromagnetic waves which are produced by the mobile device and in the influence region of which the associated antenna lies.

2. A facial brush (61, 71) for facial care according to claim 1, **characterised in that** the data transmission module comprises a permanent memory.

3. A facial brush (61, 71) for facial care according to one of the claims 1 to 2, **characterised in that** the electronics part (75) comprises a further microcontroller for the control of the electric facial care function.

4. A facial brush (61, 71) for facial care according to one of the claims 1 to 3, **characterised in that** the facial brush (71) comprises an electrical functional element (80) for carrying out the electrically operated facial care function.

5. A facial brush (61, 71) for facial care according to claim 4, **characterised in that** the electrical functional element is:
- an electromotoric drive (80) for the mechanical movement of the care brush;
- an electrical heater for heating a body care element;
- a UV device for producing UV light for the disinfection of the facial brush or parts thereof or
- a pump for delivering a fluid.

6. A facial brush (61, 71) for facial care according to one of the claims 1 to 5, **characterised in that** the electronics part (75) is designed for data from the data processing and control processor and/or data from the mobile device to be able to be stored on the non-volatile memory of the data transmission module.

7. A facial brush (61, 71) for facial care according to one of the claims 1 to 6, **characterised in that** the facial brush (61, 71) contains a humidity sensor for measuring the skin humidity.

8. A facial brush (61, 71) for facial care according to one of the claims 1 to 7, **characterised in that** the facial brush (61, 71) contains an electrical functional element being a ionising device for producing a current flow on the skin of the user by way of ionising.

9. A facial brush (61, 71) for facial care according to one of the claims 1 to 8, **characterised in that** the facial brush (61, 71) contains a camera for producing pictures or video recordings for analysing the skin portion to be treated.

10. A facial brush (61, 71) for facial care according to claim 9, **characterised in that** the camera is arranged in the care head or in the grip body of the facial brush (61, 71).

11. A functional unit comprising:
- a facial brush (61, 71) for facial care according to one of the claims 1 to 10, and
- an electronic mobile device (21), wherein the electronic mobile device (21) comprises an active transmitting and receiving unit for the bidirectional, wireless data transmission between the facial brush (61, 71) and the mobile device (21).

12. A functional unit according to claim 11, comprising
- a charging device (10) for the contact-free charging of the facial brush (61, 71) for facial care, wherein the charging device (10) comprises a data transmission module for the unidirectional or bidirectional, wireless data transmission between the data transmission module of the facial brush (61, 71) and the data transmission module of the charging device (10).

13. A functional unit according to claim 12, **characterised in that**
- the transmitting and receiving unit of the electronic mobile device (21) is designed for the unidirectional or bidirectional, wireless data transmission between the charging device (10) and the mobile device (21), and
- the data transmission module of the charging device (10) is designed for the unidirectional or bidirectional wireless data transmission between the mobile device (21) and the charging device (10).

14. A method for setting and transferring of operating parameters and control data of an electrical facial brush, which is designed as a hand held device, by way of a mobile device, wherein facial care parameters and/or facial care programs are transmitted in a wireless manner onto the electric facial brush via a software application operated on the mobile device.

15. A method according to claim 14, **characterised in that** operating data of the facial brush is received in a wireless manner by the mobile device and evaluated by the software application operated thereon.

16. A method according to claim 14 or 15, **characterised in that** sensor data of the facial brush is received by the mobile device in a wireless manner and evaluated by the software application which is operated thereon.

17. A method according to one of the claims 14 to 16, **characterised in that** at least one picture recording or video recording of the skin portion of the face to be treated is created by way of a camera installed in the mobile device, and the at least one picture recording or video recording is evaluated via a software application, and suitable facial care parameters or facial care programs are determined on the basis of the evaluation and via the mobile device are suggested to the user or transmitted onto the facial brush, or facial care hints or other information is communicated to the user via the mobile device.

18. A method according to claim 14 or 17, **characterised in that** the facial brush (61, 71) contains a humidity sensor by means of which the skin humidity is measured.

19. A method according to claim 14 or 18, **characterised in that** the facial brush (61, 71) contains a camera for producing pictures or video recordings for analysing the skin portion to be treated, and the picture and video data are transmitted to the mobile device for the analysis of the skin portion to be treated.

## Revendications

1. Brosse électrique pour le visage,
configurée comme appareil manuel (61, 71) pour soigner des parties de la peau du visage au moyen d'une brosse de soin (63, 73) et pour exercer une ou plusieurs fonctions de soin du visage opérées électriquement,
contenant un corps de poignée (62, 72) permettant de tenir la brosse (61, 71) pour le visage et contenant en outre une partie électronique (75) qui commande la ou les fonctions de soin du visage opérées électriquement, **caractérisée en ce que**
la partie électronique (75) contient un module de transfert de données qui assure un transfert de données sans fil et bidirectionnel avec un appareil électronique mobile en recourant à une technologie de communication par champ proche ("near field communication - NFC"),
**en ce que** le module de transfert de données contient:
- un microcontrôleur,
- une ou plusieurs mémoires de conservation de données et
- une antenne (76) disposée dans le corps (2) de la poignée,
**en ce que** le module de transfert de données est conçu pour extraire sans contact d'ondes électromagnétiques émises par l'appareil mobile et dans la zone d'action desquelles se situe l'antenne associée au moins une partie de l'énergie électrique nécessaire à son fonctionnement.

2. Brosse (61, 71) pour le soin du visage selon la revendication 1, **caractérisée en ce que** le module de transfert de données contient une mémoire permanente.

3. Brosse (61, 71) pour le soin du visage selon l'une des revendications 1 et 2, **caractérisée en ce que** la partie électronique (75) contient un autre microcontrôleur qui commande la fonction de soin du visage opérée électriquement.

4. Brosse (61, 71) pour le soin du visage selon l'une des revendications 1 à 3, **caractérisée en ce que** la brosse (61, 71) pour le visage contient un organe (80) fonctionnel électrique qui exécute la fonction de soin du visage opérée électriquement.

5. Brosse (61, 71) pour le soin du visage selon la revendication 4, **caractérisée en ce que** l'organe fonctionnel électrique est:
- un entraînement (80) à moteur électrique qui assure le mouvement mécanique de la brosse de soin,
- un chauffage électrique qui chauffe un élément de soin du visage,
- un dispositif à UV qui émet de la lumière UV pour désinfecter la brosse pour le visage ou certaines de ses parties ou
- une pompe de refoulement d'un fluide.

6. Brosse (61, 71) pour le soin du visage selon l'une des revendications 1 à 5, **caractérisée en ce que** la partie électronique (75) est conçue de manière à pouvoir conserver sur la mémoire non volatile du module de transfert de données des données du processeur de commande et de traitement de données et/ou des données provenant de l'appareil mobile.

7. Brosse (61, 71) pour le soin du visage selon l'une des revendications 1 à 6, **caractérisée en ce que** la brosse (61, 71) pour le visage contient un capteur d'humidité permettant de mesurer l'humidité de la peau.

8. Brosse (61, 71) pour le soin du visage selon l'une des revendications 1 à 7, **caractérisée en ce que** la brosse (61, 71) pour le visage contient un organe fonctionnel électrique qui est configurée comme dispositif d'ionisation servant à former par ionisation un écoulement de courant sur la peau de l'utilisateur.

9. Brosse (61, 71) pour le soin du visage selon l'une des revendications 1 à 8, **caractérisée en ce que** la brosse (61, 71) pour le visage contient une caméra permettant d'enregistrer des films ou des images permettant d'analyser la partie de la peau à traiter.

10. Brosse (61, 71) pour le soin du visage selon la revendication 9, **caractérisée en ce que** la caméra est disposée dans la tête de soin ou dans le corps de la poignée de la brosse (61, 71) pour le visage.

11. Unité fonctionnelle contenant:
- une brosse (61, 71) pour le soin du visage selon l'une des revendications 1 à 10 et
- un appareil électronique mobile (21), l'appareil électronique mobile (21) contenant une unité d'émission et de réception active en transfert de données sans fil et bidirectionnel entre la brosse (61, 71) pour le visage et l'appareil électronique mobile (21).

12. Unité fonctionnelle selon la revendication 11, contenant:
- un appareil (10) de rechargement qui permet de recharger sans contact la brosse (1) de soin du visage, l'appareil (10) de rechargement contenant un module de transfert de données permettant un transfert de données sans fil et uni ou bidirectionnel entre le module de transfert de données de la brosse (1) de soin du visage et le module de transfert de données de l'appareil (10) de rechargement.

13. Unité fonctionnelle selon la revendication 12, **caractérisée en ce que** l'unité d'émission et de réception de l'appareil électronique mobile (21) est conçue pour assurer un transfert de données sans fil et uni ou bidirectionnel entre l'appareil (10) de rechargement et l'appareil électronique mobile (21) et
**en ce que** le module de transfert de données de l'appareil (10) de rechargement est conçu pour assurer un transfert de données sans fil et uni ou bidirectionnel entre l'appareil électronique mobile (21) et l'appareil (10) de rechargement.

14. Procédé pour établir et transmettre au moyen d'un appareil mobile des paramètres de fonctionnement et des données de commande d'une brosse électrique pour le visage conçue comme appareil manuel,
**caractérisé en ce que**
des paramètres de soin du visage et/ou des programmes de soin du visage sont transférés sans fil sur la brosse électrique pour le visage par l'intermédiaire d'une application informatique exécutée sur l'appareil mobile.

15. Procédé selon la revendication 14, **caractérisé en ce que** des données de fonctionnement de la brosse pour le visage sont reçues sans fil et évaluées par l'appareil mobile et l'application informatique qui y est exécutée.

16. Procédé selon les revendications 14 ou 15, **caractérisé en ce que** des données d'un capteur de la brosse pour le visage sont reçues sans fil et évaluées par l'appareil mobile et l'application informatique qui y est exécutée.

17. Procédé selon l'une des revendications 14 à 16, **caractérisé en ce qu'**une ou plusieurs images ou vidéos de la partie de la peau du visage à traiter sont enregistrées au moyen d'une caméra installée dans l'appareil mobile, **en ce que** la ou les images ou vidéos enregistrées sont évaluées par une application informatique et **en ce que** sur la base de l'évaluation, des paramètres ou programmes appropriés de soin du visage sont déterminés, proposés à l'utilisateur par l'intermédiaire de l'appareil mobile ou transmis à la brosse pour le visage ou **en ce que** des indications de soin du visage ou d'autres informations sont communiquées à l'utilisateur par l'intermédiaire de l'appareil mobile.

18. Procédé selon l'une des revendications 14 à 17, **caractérisé en ce que** la brosse (61, 71) pour le visage contient un capteur d'humidité au moyen de laquelle l'humidité de la peau est mesurée.

19. Procédé selon l'une des revendications 14 à 18, **caractérisé en ce que** la brosse (61, 71) pour le visage contient une caméra permettant d'enregistrer des films ou images en vue de l'analyse de la partie de la peau à traiter et **en ce que** les données de film et/ou d'image sont transférées à l'appareil mobile en vue de l'analyse de la partie de la peau à traiter.
